(19) Europäisches Patentamt
European Patent Office
Office européen des brevets

(11) Numéro de publication : 0 300 941 B1

# (12) FASCICULE DE BREVET EUROPEEN

(45) Date de publication du fascicule du brevet : **04.03.92 Bulletin 92/10**

(51) Int. Cl.$^5$ : **H04L 12/56**

(21) Numéro de dépôt : **88460011.5**

(22) Date de dépôt : **12.07.88**

## (54) Système de commutation d'informations à priorités.

(30) Priorité : **16.07.87 FR 8710254**

(43) Date de publication de la demande : **25.01.89 Bulletin 89/04**

(45) Mention de la délivrance du brevet : **04.03.92 Bulletin 92/10**

(84) Etats contractants désignés : **BE CH DE ES GB IT LI LU NL SE**

(56) Documents cités :
**EP-A- 0 033 672**
**EP-A- 0 113 639**
**US-A- 3 979 733**
**COMPUTER NETWORKING SYMPOSIUM, Washington, DC, 17-18 novembre 1986, pages 141-150, IEEE, New York, US; S. NOJIMA et al.: "High speed packet switching network for multi-media information"**

(73) Titulaire : **ETAT FRANCAIS représenté par le Ministre des PTT (Centre National d'Etudes des Télécommunications)**
**38-40 rue du Général Leclerc**
**F-92131 Issy-les-Moulineaux (FR)**

(72) Inventeur : **Quinquis, Jean-Paul**
**rue de Cornic**
**F-22700 Perros-Guirec (FR)**
Inventeur : **Lespagnol, Albert**
**39, rue de Landerval**
**F-22700 Perros-Guirec (FR)**
Inventeur : **Kerberenes, Jacques, Yvon**
**Kerlan Servel**
**F-22300 Lannion (FR)**

(74) Mandataire : **Le Guen, Louis François**
**CABINET Louis LE GUEN 38, rue Levavasseur**
**B.P. 91**
**F-35802 Dinard Cédex (FR)**

**EP 0 300 941 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un système de commutation de paquets d'information affectés de priorités sémantiques et temporelles différentes, entre des multiplex temporels entrants et des multiplex temporels sortants, tel que connu de l'article "COMPUTER NETWORKING SYMPOSIUM," Washington, DC, 17-18 novembre 1986, pages 141-150, IEEE, New York, US; S. NOJIMA et al.: "High speed packet switching network for multi-media information"

Dans un réseau de commutation temporelle asynchrone, l'information transmise, qui peut être du son, des données, des images numérisées ou des messages de signalisation, est acheminée sous forme de paquets de bits, chaque paquet comportant une étiquette permettant de définir la source dont il provient et l'acheminement qu'il convient de lui donner dans le réseau.

Le système de commutation décrit dans le document EP-A-0 113 639 est particulièrement adapté pour constituer chaque noeud de commutation dans un réseau de commutation temporelle asynchrone. Ce système de commutation commute des paquets d'une longueur fixe de 128 bits et comportant une étiquette de 8 bits, qui sont portés, par exemple, sur seize multiplex entrants vers seize multiplex sortants. Le document EP-A-0 108 028 décrit une structure de multiplex découpé en intervalles de temps égaux où chaque paquet occupe un intervalle de temps et où chaque intervalle de temps ne transportant pas de paquet d'information provenant d'une source est rempli par un paquet "vide", c'est-à-dire un paquet dont l'étiquette fixe est réservée à ce type de paquet et ne peut être utilisée pour un paquet d'information. Le motif des bits qui suivent l'étiquette d'un paquet vide est aussi particulier. En pratique, les paquets vides servent à assurer la synchronisation de ces multiplex.

Dans le système de commutation du document EP-A-0 113 639, la fonction commutation de paquets consiste à associer à chaque paquet entrant, identifié par son numéro de multiplex entrant parmi plusieurs et son étiquette, une nouvelle identification elle-même caractérisée par deux attributs de même type, c'est-à-dire une nouvelle étiquette et le numéro du multiplex sortant parmi plusieurs qui va délivrer le paquet. Sous une autre forme, on commute le paquet (e, i), où e est le numéro du multiplex entrant et i l'étiquette, en un paquet sortant (s, j), où s est le numéro du multiplex sortant et j la nouvelle étiquette.

Dans cette commutation de paquets, une première action est entreprise sur le paquet (e, i) avant son rangement dans une mémoire tampon, cette action consistant en une "conversion d'étiquette" qui est effectuée par une mémoire de commande qui a été programmée lors de l'établissement de la communication, encore appelée circuit virtuel. Ainsi, l'étiquette i est remplacée par l'étiquette j. Le paquet (e, j) est alors rangé dans la mémoire tampon à une adresse connue, fonction de l'instant d'écriture défini par e. Cette adresse est stockée dans une file d'attente associée au multiplex sortant s. Le système est commandé par la sortie et, au cours de chaque cycle d'exploration des multiplex sortants, la file d'attente associée au multiplex sortant s est lue pour délivrer l'adresse du prochain paquet que le multiplex sortant s aura à porter.

La mémoire tampon comprend donc un ensemble de N zones de mémoire par multiplex entrant et les paquets provenant d'un multiplex entrant e sont écrits dans une zone parmi N zones affectées à ce multiplex entrant, l'adresse d'écriture d'un paquet étant incrémentée modulo-N à chaque opération d'écriture nouvelle. Dans chaque ensemble, les opérations d'écriture sont cycliques, c'est-à-dire que le $i^e$ paquet sera écrasé à l'écriture du $(i+N)^e$ paquet. Un paquet ne peut donc séjourner dans la mémoire tampon plus de N "temps paquets".

La gestion de la mémoire tampon en écriture est donc simple, mais, dans le cas où un multiplex sortant s subit une pointe de trafic, c'est-à-dire se trouve destinataire d'un nombre de paquets très supérieur à la moyenne, un paquet entrant peut attendre plus de N temps paquet avant d'être lu, si bien qu'il se trouve écrasé par un nouveau paquet entrant et qu'il est perdu. Cet incident n'a pas toujours la même portée selon que la communication concerne du son, des images ou des messages. En effet, par exemple, le son, même de bonne qualité, accepte un taux d'erreurs supérieur à celui des messages. Par contre, dans la transmission de certains messages, la perte d'un paquet peut rendre le message incompréhensible.

On peut tenter d'éviter, dans une certaine mesure, cet inconvénient en augmentant N. Mais, outre le coût dû au volume de mémoire supplémentaire, on risque alors de perturber d'autres transmissions, telles que la transmission du son. En effet, pour restituer un son de haute qualité, le délai de transmission des paquets dans le réseau doit rester inférieur à une limite prédéterminée et un paquet ne doit donc pas séjourner plus d'un temps donné dans chaque commutateur, ce qui conduit à ne pas choisir N trop grand.

Dans la demande de brevet EP-A-0 300 942 intitulée "Système de commutation de paquets de données à priorités" et déposée le même jour que la présente demande par MM. J.P. Quinquis, M. Servel et J. François, le premier nommé étant également demandeur dans la présente demande, il est prévu à d'affecter chaque paquet l'un de deux niveaux de priorité, d'associer l'information de priorité à l'adresse de lecture du paquet dans la ou les files d'attente respectivement associées aux multiplex sortants, de traiter les lectures et décalages de ces files en fonction de leur remplissage, en admettant un taux de perte plus grand pour les paquets à bas niveau de priorité, mais la gestion de la mémoire tampon en écriture n'y est pas remise en question et, donc, le temps de séjour dans la mémoire tampon y reste limité au temps de balayage de cette mémoire, soit N "temps paquets".

Par ailleurs, la contrepartie de la simplicité de la gestion de la mémoire tampon en écriture est son faible rendement. En effet:

a) un paquet entrant vide occupe néanmoins une zone de la mémoire tampon,

b) dans la mémoire tampon, une zone n'est pas réutilisable dès l'émission du paquet qu'elle contenait, mais seulement N "temps paquets" après sa dernière utilisation, et

c) le fait qu'à chaque multiplex entrant soit associé un ensemble de N zones de mémoire ne conduit à une répartition optimale que si les multiplex de sortie ont des charges équivalentes, mais conduit à des pertes importantes de paquets en cas de surcharge temporaire et locale affectant un multiplex de sortie.

De fait, des évaluations montrent, qu'avec la gestion d'écriture simple qui fait correspondre l'adresse d'écriture et l'instant d'écriture, une faible partie seulement de la capacité de la mémoire tampon est utilisée.

Un objet de l'invention consiste à prévoir un système qui permet d'améliorer le rendement de la mémoire tampon en modifiant sa gestion en écriture.

Comme on le verra dans la suite, cette gestion, suivant l'invention, se combine avec un traitement en lecture des paquets à priorités sémantiques qui correspond à celui qui est décrit dans la demande de brevet EP-A-0 300 942 déjà mentionnée ci-dessus.

De plus, cette gestion offre la possibilité de traiter des paquets à priorités temporelles. Un paquet est dit avoir une priorité temporelle de haut niveau, quand un temps maximal prédéterminé de séjour dans la mémoire tampon lui est garanti, alors que l'émission d'un paquet à bas niveau de priorité temporelle peut être retardée jusqu'à ce que le multiplex sortant auquel il est destiné ait résorbé sa surcharge.

Un autre objet de l'invention consiste donc à prévoir un système de commutation capable de traiter d'une manière optimale des paquets ayant soit, à la fois, des priorités sémantique et temporelle de haut niveau, soit des paquets ayant une priorité sémantique ou temporelle de haut niveau, soit des paquets ayant à la fois des priorités sémantique et temporelle de bas niveau.

Suivant une caractéristique de la présente invention, il est prévu un système de commutation de paquets d'information affectés de priorités sémantiques à deux niveaux entre des multiplex temporels entrants et des multiplex temporels sortants, l'adresse de mémorisation d'un paquet dans la mémoire tampon du commutateur étant rangée dans chaque file d'attente associée à chaque multiplex temporel sortant destiné à transmettre le paquet, le système comprenant une mémoire de champ d'états dont les mots comprennent chacun autant de bits que de multiplex temporels sortants, les adresses de ladite mémoire de champ de points correspondant à celles de ladite mémoire tampon, chaque bit d'un mot étant à "1" quand le paquet mémorisé à la même adresse que le mot et destiné au multiplex temporel sortant correspondant au bit a une priorité sémantique de haut niveau et n'a pas encore été transmis par le multiplex sortant concerné, chaque adresse de mémorisation de paquet étant choisies parmi les adresses de la mémoire de champ de points adressant des mots dont tous les hits sont à "0".

Suivant une autre caractéristique, la mémoire de champ de points est adressée en écriture pour y modifier le contenu d'un mot, soit à l'écriture à la même adresse dans la mémoire tampon d'un paquet à priorité sémantique de haut niveau, soit à la lecture à la même adresse dans la mémoire tampon d'un paquet à priorité sémantique de haut niveau, et adressée en lecture entre les adressages en écriture, chaque mot lu dans la mémoire de champ de points déclenchant, quand tous ses bits sont à "0", la sélection de leur adresse comme adresse libre d'écriture dans la mémoire tampon.

Suivant une autre caractéristique, chaque adresse libre de la mémoire de champ de points est mémorisée dans une file d'adresses libres dont la sortie délivre au rythme d'arrivée des paquets leurs adresses de mémorisation dans la mémoire tampon.

Suivant une autre caractéristique, la mémoire d'adresses libres n'est pas lue quand le paquet entrant est un paquet vide.

Suivant une autre caractéristique, ladite adresse de mémorisation est mémorisée dans chaque file d'attente accompagnée d'un premier bit définissant le niveau de priorité sémantique du paquet, chaque file d'attente comprenant en série entre l'entrée et la sortie deux zones, l'écriture dans la première zone n'étant, quand la seconde zone est pleine, accessible qu'aux paquets de priorité sémantique de haut niveau, et, entre deux lectures de chaque file, des adresses de lecture de paquet de priorité sémantique de bas niveau, qui avaient été mémorisées plus tôt que l'adresse de lecture du paquet de priorité sémantique de haut niveau la plus ancienne encore présente dans la file, étant détruites en nombre égal, au maximum, au nombre d'adresses de lecture mémorisées dans la première zone.

Suivant une autre caractéristique, l'adresse de mémorisation est mémorisée dans chaque file d'attente accompagnée d'un premier bit définissant le niveau de priorité sémantique du paquet et d'un second bit définissant le niveau de priorité temporelle du paquet, chaque file d'attente se composant de deux files, la mémorisation dans la première file ou dans la seconde file étant déterminée par le second bit, la première file mémorisant tous les paquets à priorité temporelle de haut niveau et la seconde file n'étant lue que quand la première file est vide.

Suivant une autre caractéristique, à chaque mot de la mémoire de champ de points correspond un bit dans une mémoire de test, ledit bit étant à "1" quand le mot correspondant contient au moins un bit à "1", ladite mémoire de test étant lue à un rythme moyen sensiblement plus lent que la fréquence moyenne de séjour des paquets dans la mémoire tampon, la lecture d'un bit à "1" dans la mémoire de test entraînant l'écriture de l'adresse du mot correspondant de la mémoire de champ de points dans la file d'adresses.

Suivant une autre caractéristique, la mémoire de champ de points a son entrée de données reliée aux fils de sélection d'autorisation d'écriture d'une adresse de mémorisation dans les files d'attente, lesdits fils étant rendus actifs pendant les seconds demi-temps d'octet du système, une entrée de validation d'écriture de bits reliées, d'une part, également auxdits fils de sélection et, d'autre part, à la sortie de l'explorateur des multiplex temporels sortants, cet explorateur étant validée pendant les premiers temps d'octet, par l'intermédiaire de premières portes ET qui sont rendues passantes individuellement par le bit de priorité sémantique provenant soit de la mémoire de traduction d'étiquette du système, soit de la sortie de la file d'attente explorée, une entrée d'adresses reliée à la sortie d'un premier multiplexeur dont la première entrée est reliée à la sortie d'un compteur binaire cyclique et la seconde à la sortie d'un second multiplexeur dont la première entrée est reliée à la sortie de données des files d'attente et la seconde à la sortie de la file d'adresses, le premier multiplexeur étant commandée par ledit bit de priorité sémantique et le second multiplexeur étant commandé par les signaux de seconds demi-temps d'octet, et une sortie de données reliée aux entrées correspondantes d'une porte NON-ET dont la sortie est reliée à l'entrée d'autorisation d'écriture de la mémoire d'adresses dont l'entrée de données est reliée à la sortie du compteur cyclique et la sortie de données délivre les adresses de mémorisation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un bloc-diagramme d'un commutateur de paquets suivant l'invention,

La Fig. 2 est le schéma d'un circuit de gestion de mémoire tampon suivant l'invention,

la Fig. 3 montre des chronogrammes illustrant le fonctionnement de la mémoire d'état du circuit de gestion de la Fig. 2,

la Fig. 4 montre des chronogrammes illustrant le fonctionnement du circuit de sécurisation du circuit de gestion de la Fig. 2,

la Fig. 5 est le bloc-diagramme du circuit d'aiguillage du commutateur de la Fig. 1,

la Fig. 6 est le schéma d'un circuit de traitement du circuit d'aiguillage de la Fig. 5,

les Figs. 7a à 12a sont des diagrammes temporels illustrant divers cas de fonctionnement d'une des deux files de commande du circuit de traitement de la Fig. 6, et

les Figs. 7b à 12b sont des diagrammes qui sont respectivement associés à ceux des Figs. 7a à 12a pour illustrer comment le contenu de la file d'attente concernée varie selon le cas de fonctionnement.

Le commutateur de la Fig. 1 est du type du commutateur décrit dans le document EP-A-0 113 639, mais s'en distingue par le contenu de son circuit d'aiguillage ACE et le mode d'adressage en écriture de sa mémoire tampon de paquets MP.

Le commutateur comporte seize jonctions d'entrée E0 à E15 et seize jonctions de sortie S0 à S15, qui portent chacune un multiplex de paquets de longueur fixe, tel que celui qui est décrit dans le document EP-A-0 108 028. Sur chacune des jonctions d'entrée E0 à E15, est prévu un circuit d'entrée CE qui convertit chaque octet série en octet parallèle et qui cadre les débuts de paquets de manière que d'une jonction d'entrée la suivante, ces débuts soient délivrés avec un décalage d'un octet. Les sorties des circuits d'entrée CE sont reliées aux entrées correspondantes d'une matrice de rotation d'entrée MRE qui effectue une conversion parallèle-diagonale ou encore une conversion "paragonale". Après conversion paragonale, les étiquettes des paquets sont toutes délivrées séquentiellement par la première sortie de la matrice d'entrée MRE tandis que la deuxième sortie délivre les seconds octets des paquets, la troisième les troisièmes octets, etc. Chaque étiquette i, accompagnée du rang e de la jonction entrante qui l'a portée, est appliquée à la mémoire de traduction d'étiquette MC qui, d'une part, délivre la nouvelle étiquette j et, d'autre part, l'information s de sélection d'une ou de plusieurs files d'attente dans le circuit d'aiguillage ACE. De plus, ce qui n'existait pas dans le commutateur du document EP-A-0 113 639, la mémoire MC délivre, vers le circuit d'aiguillage ACE, deux bits p1 et p2. Le bit p1 à "0" signifie que le paquet bénéficie d'une priorité sémantique et à "1" il signifie que le paquet n'a pas de priorité sémantique. Le bit p2 à "0" signifie que le paquet bénéficie d'une priorité temporelle et à "1" il signifie que le paquet n'a pas de priorité temporelle. Ainsi, il y a quatre catégories de paquets: les paquets A, avec p1 = p2 = 1, qui n'ont aucune priorité, les paquets B, avec p1 = 0 et p2 = 1, qui ont la priorité sémantique, mais non la priorité temporelle, les paquets C, avec p1 = 1 et p2 = 0, qui ont la priorité temporelle, mais non la priorité sémantique, et les paquets D, avec p1 = p2 = 0, qui ont les deux priorités, sémantique et temporelle. Enfin, la mémoire de traduction MP a encore un fil de sortie PNV auquel elle applique un bit "1" quand l'étiquette qu'elle a traduite est une étiquette de paquet non vide et un bit "0" dans le cas contraire.

La sortie de la mémoire MC qui délivre la nouvelle étiquette j, sur huit fils, est reliée à la première entrée de la mémoire tampon MP dont les autres entrées sont reliées aux sorties correspondantes de la matrice MRE. Les sorties de la mémoire tampon MP sont reliées aux entrées correspondantes de la matrice de rotation de sortie MRS dont les sorties sont respectivement reliées à des convertisseurs d'octet parallèle-série P/S dont les sorties sont respectivement reliées aux jonctions sortantes S0 à S15.

Le commutateur de la Fig. 1 comprend encore une unité centrale de commande UCC qui, en fonction des circuits virtuels établis dans le réseau, fournit à la mémoire MC les informations de traduction des étiquettes, et une base de temps BT qui fournit, à partir d'une horloge bit locale, l'horloge octet et le mot e. A titre d'exemple, pour un commutateur comportant seize jonctions entrantes, le mot e se compose de quatre bits. Le mot e est engendré dans la base de temps BT par un compteur binaire dont les quatre premières sorties délivrent le mot e, le compteur étant incrémenté au rythme de l'horloge octet. Le mot e porté par la liaison e, Fig. 1, sert à commander la matrice de rotation d'entrée MRE, à identifier les jonctions entrantes vers la mémoire MC et à explorer les files d'attente dans le circuit d'aiguillage ACE. Son inverse e/, obtenu par l'inverseur INV et porté par la liaison e/, sert à commander la matrice de rotation de sortie MRS.

Si l'on considère les seize files d'attente du commutateur décrit dans le document EP-A-0 113 639, dans lesquelles sont mémorisées les adresses de lecture des paquets, et si $2^k$ est le nombre total d'adresses dans la mémoire tampon MP, la capacité de ces files ne pouvait dépasser $2^{k-e}$, car, après un temps égal à $2^{k-e}.T$, où T est la durée du cycle d'exploration des jonctions sortantes S0 à S15, tout paquet écrit dans la mémoire tampon MP était écrasé. A noter que T est égal à une temps paquet, car égal à $2^e.t0$ où t0 est la période de l'horloge octet.

Suivant l'invention, on remédie à cet inconvénient en prévoyant des moyens pour ne plus, en écriture, adresser la mémoire tampon MP cycliquement, mais en fonction des zones de la mémoire déjà occupées par des paquets à priorité sémantique. Ces moyens d'adressage en écriture, qui constituent des moyens de gestion de la mémoire, sont, à la Fig. 1, désignés par GM.

A la Fig. 1, le faisceau s, comprenant les fils MS0 à MS15, et le fil p1, issus de la mémoire MC, sont reliés, en parallèle, à des entrées correspondantes du circuit d'aiguillage ACE et du circuit de gestion de mémoire GM, tandis que le fil p2 n'est relié qu'au circuit d'aiguillage ACE. Le circuit d'aiguillage délivre, d'une part, le mot d'adresse de lecture AD(0-7) et, d'autre part, un bit pr qui indique si l'adresse de lecture concerne un paquet à priorité sémantique ou non. Le faisceau AD(0-7) et le fil pr sont reliés à des entrées correspondantes du circuit GM. Le faisceau e est relié aux deux circuits ACE et GM. Le circuit de gestion de mémoire GM délivre, sur un faisceau K, l'adresse d'écriture dans la mémoire MP, le mot K étant également transmis au circuit d'aiguillage ACE.

Le schéma du circuit de gestion de mémoire GM est montré à la Fig. 2 et celui du circuit d'aiguillage ACE à la Fig. 6. A la Fig. 2, où l'on a également montré les liaisons avec la mémoire MP et le circuit ACE, le circuit de gestion GM comprend essentiellement deux mémoires MAP et ADL, et leurs logiques de commande associées.

La mémoire MAP est une mémoire qui reflète l'état d'occupation de la mémoire tampon MP par des paquets à priorité sémantique qui n'ont pas encore été émis. Dans la mémoire tampon MP, à chaque zone i, qui constitue une zone de rangement des 128 bits d'un paquet, correspond un mot Zi de seize bits dont l'adresse i est la même. Dans un mot Zi, chaque bit correspond à une jonction sortante S0 à S15 et le bit est à "1" si le paquet concerné a une priorité sémantique de haut niveau vers la jonction correspondante et n'est remis à "0" qu'une fois que la jonction sortante a émis le paquet concerné. Il apparaît donc que le contenu de la mémoire MAP peut être modifié soit à l'écriture d'un paquet entrant, soit à la lecture d'un paquet sortant. la mémoire est, en dehors des opérations d'écriture, explorée cycliquement pour délivrer successivement les mots Zi. A chaque fois, qu'un mot Zi est trouvé avec tous ses bits à "0", son adresse i est écrite dans la file ADL. Ainsi, on écrit dans la mémoire ADL, les adresses i qui sont disponibles pour l'écriture de paquets entrants dans la mémoire tampon MP.

La mémoire ADL est une file qui contient donc, à un instant donné, une liste d'adresses disponibles de la mémoire tampon MP. La sortie de la file ADL délivre, à un instant donné, l'adresse K à laquelle sera mémorisé le paquet entrant courant. Comme on l'a déjà mentionné, ce mot K est également transmis dans la ou les files d'attente du circuit d'aiguillage ACE qui sont désignées par les signaux émis par la mémoire de traduction MC sur le fasiceau s et les fils p1 et p2. La capacité de la file d'adresses d'écriture ADL peut être relativement faible. Dès qu'elle est pleine, sa sortie FP, indiquant cet état, inhibe l'exploration de la mémoire MAP.

La mémoire MAP a une entrée de données ADE, des entrées de validation d'écriture w0 à w15, une entrée d'adressage EAD et une sortie de données Zi. L'entrée ADE a seize fils, correspondant aux seize bits d'un mot Zi, qui sont respectivement reliés aux sorties de seize portes R1(0-15) dont les premières entrées sont respectivement reliées aux fils MS0 à MS15 et dont les secondes entrées reçoivent le signal U. Le signal U est au niveau "0" pendant la première moitié d'un temps octet et au niveau "1" pendant la seconde. On utilisera aussi, dans la suite, son inverse U/.

Les entrées w0 à w15 sont respectivement reliées aux sorties de seize portes ET R2(0-15) dont les premières entrées sont respectivement reliées aux sorties de portes OU R3(0-15) et dont les secondes entrées sont reliées en parallèle à la sortie d'une porte OU R4. Les premières entrées des portes OU R3 sont respectivement reliées aux sorties des portes ET R1(0-15) et leurs secondes entrées sont respectivement reliées aux seize sorties d'un démultiplexeur N1 dont l'entrée de données reçoit le signal U/ et l'entrée de commande le signal e. Les entrées de la porte OU R4 sont reliées au fil p1 provenant de la mémoire de traduction MC et au fil pr provenant du circuit d'aiguillage ACE.

L'entrée d'adressage EAD, qui comporte k fils si la capacité de la memoire tampon MP est de $2^k$, est reliée à la sortie d'un multiplexeur N2 dont une entrée de données SCPT1 est reliée à la sortie d'un compteur CPT1, dont l'autre entrée de données est reliée à la sortie d'un autre multiplexeur N3 et dont l'entrée de commande est reliée à la sortie de la porte OU R4. Le multiplexeur N3 a une entrée de données reliée à la sortie K de la file ADL, une autre entrée de données reliée à la sortie AD(0-7) du circuit ACE et une entrée de commande qui reçoit le signal U.

La sortie de données Zi de la mémoire MAP, à seize fils, est reliée aux seize entrées d'une porte NI R5 dont la sortie est au niveau "0" tant qu'il y a un bit "1" dans le mot lu Zi.

La file ADL a une entrée de données reliée à la sortie d'un multiplexeur N4, une sortie de données K, une entrée d'horloge d'écriture fonctionnant à la fréquence 2H, fréquence double de la fréquence octet, une entrée AE d'autorisation d'écriture, une sortie FP d'indication de file pleine et une entrée d'horloge de lecture HL. La première entrée du multiplexeur N4 est reliée à la sortie du compteur CPT1. Le compteur CPT1 est un compteur modulo $2^k$. Il a son entrée reliée à la sortie d'une porte ET R6 à trois entrées dont la première entrée, directe, reçoit l'horloge 2H, dont la seconde entrée, inversée, est reliée à la sortie FP de la file ADL et dont la troisième entrée, inversée, est reliée à la sortie de la porte OU R4.

La sortie FP est encore reliée à une entrée, inversée d'une porte ET R7 dont la sortie est reliée, d'une part, à l'entrée de commande du multiplexeur N4 et, d'autre part, à une entrée d'une porte OU R8. L'autre entrée de la porte OU R8 est reliée à la sortie de la porte NI R5 et sa sortie est reliée à l'entrée AE d'autorisation d'écriture de la file ADL. L'entrée HL d'horloge de lecture de la file ADL est reliée à la sortie d'une porte ET R9 dont une entrée reçoit l'horloge H et dont l'autre entrée est reliée à la sortie correspondante de la mémoire de traduction MC par le fil PNV, qui est au niveau "1" quand l'étiquette convertie par la mémoire MC n'est pas celle d'un paquet vide.

La sortie de données K de la file ADL est reliée aux entrées correspondantes du circuit d'aiguillage ACE et du multiplexeur N3, ainsi qu'à l'entrée d'un registre tampon G dont l'entrée d'horloge reçoit l'horloge H et dont la sortie est reliée, d'une part, à l'entrée d'adressage de la mémoire tampon MP et, d'autre part, à une entrée d'un multiplexeur N5. L'autre entrée du multiplexeur N5 est reliée à la sortie d'un compteur CPT2 qui est également reliée à la seconde entrée du multiplexeur N4. La sortie de débordement du compteur est reliée à l'entrée RAZ d'une bascule BB1 dont l'entrée de mise à "1" est reliée à un contact CLE actionné périodiquement au moyen d'une minuterie, non montrée. La sortie Q de la bascule BB1 est reliée à l'entrée de données d'une bascule BB2 qui a son entrée d'horloge qui reçoit le signal H/ et sa sortie Q reliée à l'entrée de commande du multiplexeur N5. La sortie Q de la bascule BB2 est également reliée à l'entrée de données d'une mémoire MEM et à la première entrée d'une porte ET R10 à trois entrées. La mémoire MEM est prévue pour mémoriser $2^k$ mots Y de 1 bit qui correspondent respectivement aux zones dans la mémoire tampon MP ou aux mots Zi dans la mémoire MAP. Chaque mot Y a son bit à "1" quand la zone correspondante n'est pas libre et à "0" dans le cas contraire. La mémoire MEM a son entrée d'activation d'écriture qui reçoit le signal H, son entrée d'adressage qui est reliée à la sortie du multiplexeur N5 et sa sortie de données qui est reliée à la seconde entrée de la porte ET R10. La troisième entrée de la porte ET R10 reçoit le signal H/ et sa sortie est reliée à la seconde entrée, directe, de la porte ET R7.

Le fonctionnement du circuit de gestion GM de la Fig. 2 va être exposé en décrivant les opérations élémentaires suivantes: exploration de la mémoire MAP, écriture d'un paquet ayant un niveau haut de priorité sémantique, lecture vers une jonction sortante d'un paquet ayant un niveau haut de priorité sémantique, supervision des états d'occupation.

L'exploration de la mémoire MAP est commandée par le compteur CPT1. La porte R6 étant supposée passante, ce qui implique que la sortie de la porte OU R4 est à "0" ainsi que le signal FP, le signal d'horloge 2H incrémente le compteur CPT1 dont le signal de sortie SCPT1 est appliqué à l'entrée "0" du multiplexeur N2. Comme le signal de sortie de la porte OU R4 est à "0", le multiplexeur N2 applique le signal SCPT1 à l'entrée d'adresses de la mémoire MAP. Par ailleurs, aucune des portes R2(015) n'étant passante car leurs secondes entrées sont à "0", l'adresse SCPT1 provoque la lecture du mot Zi mémorisé à cette adresse. Si ce mot Zi contient un ou plusieurs bits à "1", la porte NI R5 ne délivre pas de signal et aucune écriture n'a lieu dans la file ADL. SI le mot Zi lu ne contient que des bits à "0", cela veut dire que le paquet mémorisé à l'adresse SCPT1 dans la mémoire tampon MP n'a pas de priorité sémantique ou a été émis vers toutes ses jonctions sortantes, la porte NI R5 applique, par l'intermédiaire de la porte OU R8, un signal à l'entrée AE d'autorisation d'écriture dans la file ADL qui reçoit la même adresse SCPT1 provenant du compteur CPT1 à travers le multiplexeur N4. En effet, tant que la porte R7 est bloquée, le signal de sortie du compteur CPT1, appliqué à l'entrée "0" du multiplexeur N4, est transmis par celui-ci. On a ainsi écrit dans la file ADL une adresse d'écriture de paquet qui sera utilisée ultérieurement.

Quand la file ADL est pleine, le signal FP, à "1", bloque la porte R6 quine transmet plus l'horloge 2H et le compteur CPT1 s'arrête. L'exploration de la mémoire MAP est donc arrêtée quand la file ADL est pleine. Le compteur CPT1 est aussi arrêté quand une opération d'écriture est en cours dans la mémoire MAP, c'est-à-dire quand la sortie de la porte OU R4 est à "1".

A chaque temps octet H, le fil PNV étant supposé à l'état "1", une adresses d'écriture K est lue dans la mémoire ADL et transmis à l'entrée d'adressage d'écriture de la mémoire MP, à travers le registre tampon G, au circuit d'aiguillage ACE et à l'entrée "1" du multiplexeur N2, à travers le multiplexeur N3, lequel est ouvert par le signal de commande U. Si le paquet à écrire à l'adresse K dans la mémoire tampon MP a une priorité sémantique de haut niveau, le fil p1 est à "1" ce qui ouvre la porte OU R4 qui transmet l'adresse K à l'entrée d'adresse de la mémoire MAP. Par ailleurs, pendant le même temps U, les portes Et R1(0-15) transmettent le mot ADE provenant de la mémoire MC et désignant les jonctions sortantes impliquées, vers l'entrée de données de la mémoire MAP. Enfin, le même mot ADE est transmis aux portes OU R3(0-15) qui le transmet aux entrées correspondantes des portes ET R2(0-15) qui sont ouvertes par la sortie de la porte R4. Donc, les entrées d'activation d'écritures w0 à w15 qui correspondent aux jonctions sortantes S0 à S15 désignées pour transmettre le paquet concerné sont marquées. Le mot ADE est donc écrit dans la mémoire MAP, où il devient le mot Zi.

Si le paquet à écrire n'a pas de priorité sémantique de haut niveau, aucune des entrées w1 à w15 n'est activée, si bien qu'à l'adresse K dans la mémoire MAP, le mot Zi reste avec tous ses bits à "0".

Quand la jonction sortante, identifiée par le signal e/, transmet un paquet à priorité sémantique de haut niveau, le fil pr de sortie du circuit d'aiguillage ACE ouvre la porte OU R4, le multiplexeur N3 relie, pendant le signal U, la sortie AD(0-7) du circuit ACE à l'entrée "1" du multiplexeur N2 qui transmet donc l'adresse de lecture AD(0-7) du paquet à l'entrée d'adresse de la mémoire MAP, et le démultiplexeur N1, commandé par le signal e/, transmet le signal U/ à la porte R3(0-15) qui correspond à la jonction sortqante impliquée. Par ailleurs, toutes les portes R1(0-15) sont fermées pendant le signal U/, l'entrée de données de la mémoire MAP transmet donc un mot où tous les bits sont à "0". Toutefois, seul le "0", qui correspond à l'entrée d'activation d'écriture w0 à w15 désignée par la porte R3 ouverte, sera écrit. Dans le mot Zi, il y a ainsi passage de "1" à "0" pour le bit correspondant à la jonction sortante sur laquelle a été émis le paquet à priorité sémantique considéré.

Quand le paquet à transmettre n'a pas de priorité sémantique de haut niveau, la porte R4 est fermée, aucune porte R2(0-15) n'est ouverte et aucune modification ne se produit sur le mot Zi correspondant. Cette remarque a surtout de l'intérêt si on choisit de moduler les priorités sémantiques pour les paquets diffusés. Il faut alors autant de fils p1 que de fils s et autant de portes R4. Des modifications mineures du ressort de l'homme de métier seraient alors à apporter au schéma de la Fig. 2.

Les chronogrammes de la Fig. 3 illustrent respectivement le signal e qui identifie le temps octet, le signal K, le signal AD(0-7), tous les trois synchrones, le signal U qui est à "0" pendant le premier demi-temps octet et à "1" l'autre demi-temps, le signal p1, le signal pr, le signal SEL de sortie de la porte OU R4, le signal SAD de sortie du multiplexeur N3, les signaux MS(0-15) délivrés par la mémoire MC, les signaux ADE(0-15) de sortie des portes R1(0-15) et les signaux w(0-15) délivrés par les portes R2(0-15).

A titre d'exemple, on a supposé qu'un paquet à priorité sémantiéque de haut niveau, à diffuser vers les jonctions sortantes S0, S5 et S9, devait être chargé en mémoire tampon à l'adresse d'écriture "24" et que, dans le même temps octet, un paquet à priorité sémantique de haut niveau, qui avait été écrit en mémoire tampon à l'adresse "4", devait être émis vers la jonction sortante S7.

Le temps octet, défini par e, a donc la valeur 7, le signal AD(0-7) la valeur 4 et le signal K la valeur 24. Le signal p1 est à "1" pendant tout le temps octet n° 7 et il en est de même du signal pr. La porte R4 délivre donc le signal SEL à "1" pendant le même temps octet. Le multiplexeur N3, commandé par le signal U, délivre, pendant le premier demi-temps, la valeur 4 de AD(0-7) et pendant l'autre demi-temps la valeur 24 de K, ce qu'indique le signal SAD. Pendant tout le temps octet, dans le faisceau s, seuls les signaux MS0, MS5 et MS9 sont à "1". Tous les signaux ADE(0-15) sont à "0" pendant le premier demi-temps (U = 0) et seuls les fils ADE0, ADE5 et ADE9 sont à "1" pendant l'autre demi-temps (U = 1). Pendant le premier demi-temps, le démultiplexeur N1 délivre un "1" vers la porte R3(7) et des "0" vers les autres portes. Donc la porte R2(7) délivre un "1" pendant ce premier demi-temps. C'est ce que montre w7 et, comme au même moment le fil ADE4 est à "0", le bit n° 7 du mot n° 4 passe à "0". Pendant le second demi-temps, les portes R2(0), R2(5) et R2(9) délivrent des "1", les fils ADE0, ADE5 et ADE9 sont à "1" et l'adresse délivre par le signal SAD a la valeur 24. Donc, les bits 0, 5 et 9 du mot Zi d'adresse 24 passent à "1", les autres bits de ce mot restant à "0".

Comme on l'a vu ci-dessus en relation avec l'exploration de la mémoire MAP, une zone de la mémoire tampon MP occupée par un paquet à priorité sémantique n'est réutilisable que si le mot Zi qui lui correspond dans la mémoire MAP a tous ses bits à "0". Or, un débordement d'une file d'attente ou un mauvais fonctionnement d'un composant, tel qu'une des portes R2(0-15), peut empêcher la remise à zéro d'un ou de plusieurs bits d'un mot Zi. Bien que de probabilité très faible, ce type d'événement a un effet cumulatif. Suivant l'invention, on utilise la mémoire MEM et le compteur CPT2 pour libérer artificiellement une zone considérée comme définitivement bloquée.

Hors cycle de vérification, la sortie Q de la bascule BB2 et donc l'entrée de données de la mémoire MEM sont à "0". Dans cet état, à chaque fois qu'une adresse d'écriture K est lue dans la file ADL, cette adresse est transmise par le multiplexeur N5 a l'entrée d'adressage de la mémoire MEM dont le bit correspondant est mis à "0". Par ailleurs, la sortie de la porte R10 est à "0".

Quand l'entrée CLE est activée, le signal de sortie Q de la bascule BB1 est recopié, au temps H/, par la bascule BB2 qui délivre un signal au niveau "1". Le multiplexeur N5 change d'état et transmet les signaux de sortie du compteur CPT2 vers l'entrée d'adressage de la mémoire MEM. A chaque temps H/, la porte A7 recopie le bit exploré dans la mémoire MEM. Si ce bit est à "1", la zone associée n'a toujours pas été libérée et est considérée comme bloquée. La porte R10 dont la sortie est au niveau "1", change l'état du multiplexeur N4, par l'intermédiaire de la porte R7, la file ADL étant supposée non pleine. Le multiplexeur N4 transmet à l'entrée de données de la file ADL le compte atteint par le compteur CPT2, c'est-à-dire l'adresse de la zone considérée comme bloquée, qui sera ensuite délivrée par la file ADL pour l'écriture d'un nouveau paquet. Ainsi, la mémoire MEM et le compteur CPT2, avec leurs circuits associés, permettent de débloquer une adresse. A noter que le bit correspondant de la mémoire MEM est immédiatement remis à "1" par la sortie de la bascule BB2. Quand le compteur CPT2 déborde, il remet à zéro la bascule BB1 et le système se retrouve hors cycle de vérification.

Les chronogrammes de la Fig. 4 illustrent respectivement le signal qui provient soit de la sortie du registre tampon G, soit de la sortie du compteur CPT2, et qui peut prendre une valeur de 0 à 255; le signal d'horloge octet H; le signal de fréquence 2H; et le signal provenant de la sortie Q de la bascule BB2.

Le circuit d'aiguillage ACE de la Fig. 5 comprend seize circuits de traitement identiques CT0 à CT15, un circuit d'exploration SCA et un multiplexeur MX. Les circuits CT0 à CT15 contiennent chacun deux files d'attente et des circuits logiques. Ainsi, le circuit CT0 contient les deux files FSPT0 et FPT0, le circuit CT1 contient les files FSPT1 et FPT1, ... et le circuit CT15 contient les files FSPT15 et FPT15.

A la Fig. 6, on a montré le circuit CT0 et le circuit SCA, lequel est commun aux seize circuits de traitement. La file d'attente FPT0 a une entrée de données qui reçoit le mot K de la file ADL, plus le signal p1 de la mémoire de traduction d'étiquette MC, une sortie de données qui délivre l'adresse de lecture SFO et un signal SP, une entrée d'horloge d'écriture HE, une entrée d'horloge de lecture HL, une entrée d'autorisation d'écriture AE, une entrée d'autorisation de décalage AL et une sortie FNV0 indiquant que le file n'est pas vide. Le signal SP correspond au signal p1 associé à l'adresse SF0 qui est présente à la sortie de données de la file FPT0. De plus, la file FPT0 est divisée en deux zones ZT et ZA, arrangées en série entre l'entrée et la sortie de données, et elle est pourvue d'une sortie FPN indiquant que le zone ZA est pleine et d'une sortie PP indiquant que la zone ZT contient au moins un mot.

La file d'attente FSPT0 a une entrée de données qui reçoit le mot K de la file ADL, plus le signal p1 de la mémoire de traduction d'étiquette MC, une sortie de données qui délivre l'adresse de lecture SF0′ et un signal SP′, une entrée d'horloge d'écriture HE, une entrée d'horloge de lecture HL, une entrée d'autorisation d'écriture AE′, une entrée d'autorisation de décalage AL′ et une sortie FNV0′ indiquant que la file n'est pas vide. Le signal SP′ correspond au signal p1 associé à l'adresse SF0′ qui est présente à la sortie de données de la file FSPT0. De plus, la file FSPT0 est divisée en deux zones ZT′ et ZA′, arrangées en série entre l'entrée et la sortie de données, et elle est pourvue d'une sortie FPN′ indiquant que la zone ZA′ est pleine et d'une sortie PP′ indiquant que la zone ZT′ contient au moins un mot.

Le faisceau s comporte seize fils MS0 à MS15 lesquels sont respectivement associés aux circuits CT0 à CT15. Le fil transmettant le signal p1 est multiplé sur les entrées correspondantes des circuits CT0 à CT15. Les sorties de données SC0 à SC15 des circuits CT0 à CT15 sont respectivement reliées aux seize entrées du multiplexeur MX dont la sortie délivre les adresses de lecture à la mémoire tampon MP, plus le signal pr. Les sorties FNV0 et FNV′0 sont respectivement reliées à des entrées correspondantes du circuit d'exploration SCA.

Dans le circuit SCA, les entrées FNV0 à FNV15 sont respectivement reliées aux seize entrées d'un multiplexeur MNV dont la sortie est reliée à l'entrée de données d'une bascule VP dont l'entrée d'horloge reçoit un signal HD. La sortie Q de la bascule VP délivre le signal SVP et est reliée à l'entrée d'un démultiplexeur DMF dont les seize sorties délivrent des signaux VS0 à VS15 vers les circuits CT0 à CT15, respectivement. Les entrées de commande du démultiplexeur DMF et du multiplexeur MNV reçoivent respectivement les signaux e et BT1.

Dans les circuit SCA, les entrées FNV'0 à FNV'15 sont respectivement reliées aux seize entrées d'un multiplexeur MNV' dont la sortie est reliée à l'entrée d'une bascule VP' dont l'entrée d'horloge reçoit un signal HD. La sortie Q de la bascule VP' délivre le signal SVP' et est reliée à l'entrée d'un démultiplexeur DMF' dont les seize sorties délivrent des signaux VS'0 à VS'15 vers les circuits CT0 à CT15, respectivement. Les entrées de commande du démultiplexeur DMF' et du multiplexeur MNV' reçoivent respectivement les signaux e et BT1.

L'entrée AE de la file FPT0 est reliée à la sortie d'une porte ET P1 à trois entrées dont la première entrée est reliée au fil p2, la seconde au fil MS0 et la troisième à la sortie d'une porte NON-ET P2. Une entrée inversée de la porte P2 est reliée au fil p1 et l'autre à la sortie FPN de la file. La sortie PP de la file est reliée, d'une part, à l'entrée de signal d'une bascule B1 et, d'autre part, à l'entrée d'un inverseur I dont la sortie est reliée à la première entrée d'une porte ET P3 à trois entrées dont la seconde est reliée à la sortie SP de la file et dont la troisième reçoit le signal HL. La sortie de la porte P3 est reliée à l'entrée RAZ de la bascule B1 dont l'entrée d'horloge est reliée à la sortie VS0 du démultiplexeur DMF. La sortie Q de la bascule B1, qui transmet le signal SB1, est reliée à l'entrée de mise à "1" d'une bascule B2 dont l'entrée de signal est à "0" et dont l'entrée d'horloge reçoit le signal HD. La sortie Q de la bascule B2, qui transmet le signal pp1, est reliée à l'entrée de signal d'une bascule B3 dont l'entrée d'horloge reçoit le signal HD. La sortie Q de la bascule B3, qui transmet le signal pp2, est reliée à une entrée d'une porte ET P4 dont la seconde entrée reçoit le signal SP. La sortie de la porte P4 est reliée à une entrée d'une porte OU P5 dont l'autre entrée est reliée à la sortie VS0 du démultiplexeur DMF et dont la sortie est reliée à l'entrée d'autorisation de décalage AL.

L'entrée AE' de la file FSPT0 est reliée à la sortie d'une porte ET P'1 à trois entrées, dont une entrée inverseuse et deux entrée directes, dont l'entrée inverseuse est reliée au fil p2, la première entrée directe au fil MS0 et la seconde entrée directe à la sortie d'une porte NON-ET P'2. Une entrée inversée de la porte P'2 est reliée au fil p1 et l'autre à la sortie FPN' de la file. La sortie PP' de la file est reliée, d'une part, à l'entrée de signal d'une bascule B'1 et, d'autre part, à l'entrée d'un inverseur I' dont la sortie est reliée à la première entrée d'une porte ET P'3 à trois entrées dont la seconde est reliée à la sortie SP' de la file et dont la troisième reçoit le signal HL. La sortie de la porte P'3 est reliée à l'entrée RAZ de la bascule B'1 dont l'entrée d'horloge est reliée à la sortie une porte ET P6. La porte P6 a une entrée directe qui est reliée à la sortie VS'0 du démultiplexeur DMF' et une entrée inverseuse qui est reliée à la sortie VS0 du démultiplexeur DMF. La sortie Q de la bascule B'1 est reliée à l'entrée de mise à "1" d'une bascule B'2 dont l'entrée de signal est à "0" et dont l'entrée d'horloge reçoit le signal HD. La sortie Q de la bascule B'2 est reliée à l'entrée de signal d'une bascule B'3 dont l'entrée d'horloge reçoit le signal HD. La sortie Q de la bascule B'3 est reliée à une entrée d'une porte ET P'4 dont la seconde entrée reçoit le signal SP'. La sortie de la porte P'4 est reliée à une entrée d'une porte OU P'5 dont l'autre entrée est reliée à la sortie de la porte P6 et dont la sortie est reliée à l'entrée d'autorisation de décalage AL'.

Les huit fils de sortie de données de la file FPT0, ainsi que le fil de sortie SP, sont reliées aux premières entrées de portes ET P7(0-9) dont les secondes entrées sont reliées à la sortie VS0 du démultiplexeur DMF. Les huit fils de sortie de données de la file FSPT0, ainsi que le fil de sortie SP', sont reliées aux premières entrées de portes ET P'7(0-9) dont les secondes entrées sont reliées à la sortie de la porte ET P6. Les sorties des portes P7(0-9) et des portes P'7(0-9) sont respectivement reliées en parallèle aux entrées du multiplexeur MX, dont huit sorties portent l'adresse de lecture AD(0-8) et la neuvième le signal pr.

Les diagrammes temporels des signaux HE, HL, HD, K, BT1 et e sont montrés à la Fig. 7a, ainsi d'ailleurs qu'aux Figs. 8a à 12a. Le signal h0 a une période double de celle de l'horloge bit du commutateur. Le signal e, disponible sur quatre fils, est incrémenté à chaque temps opctet, c'est-à-dire toutes les quatre périodes de h0. Le signal K est fourni par la file ADL qui est lue au rythme de l'horloge octet H, le signal K change donc de valeur en synchronisme avec l'incrémentation du signal e. Par sa valeur, le mot K définit une adresse d'écriture variant, d'une manière quasi-aléatoire, de 0 à 255. Le signal HD est au niveau haut pendant les deux premiers temps bit d'un temps octet et au niveau bas pendant les six temps bit suivants. Le signal HL est en avance de deux temps bit par rapport au signal HD et le signal HE est en avance de deux temps bit par rapport au signal HL. Le signal BT1, disponible sur quatre fils, est incrémenté à chaque temps octet, mais est en avance d'un demi-temps par rapport au signal e.

Les signaux MS(0-15), qui sont délivrés par la mémoire MC, durent chacun un temps octet. Quand, par exemple, le signal MS0 est à "1", il y a demande d'écriture dans une des files du circuit CT0 et, quand il est à "0", il n'y a pas de demande vers les files de ce circuit. Plus particulièrement, l'écriture, quand elle est demandée, est effectuée sur le front montant du signal HE.

Comme le montre la Fig. 6, l'écriture d'une adresse de lecture de paquet n'est possible que dans la file FPT0 ou dans la file FSPT0 selon la valeur du bit p2 qui définit le niveau de priorité temporelle. Quand p2 est à "1", l'adresse K ne peut être écrite que dans la file FPT0 car seule la porte ET P1 peut mettre l'entrée AE au niveau haut. Quand p2 est à "0", l'adresse K ne peut entrer que dans la file FSPT0 dont l'autorisation d'écriture peut être reçue par la porte ET P1'. Ainsi, la file FPT0 ne contient que des adresses de paquets à haut niveau de priorité temporelle et certains de ces paquets peuvent avoir également une priorité sémantique de haut niveau. La file FSPT0 ne contiendra que des adresses de paquets sans priorité temporelle, mais certains de ces paquets pourront avoir un niveau haut de priorité sémantique.

Par ailleurs, l'écriture dans la file FPT0 (avec p2 = 1) est autorisée quand le signal FPN est à "0", car la sortie de la porte NON-ET P2 est à "1", quel que soit l'état du signal p1, c'est-à-dire que le paquet concerné ait une priorité sémantique de haut niveau ou non. Le passage au niveau "1" du fil MS0 ouvre alors la porte P1 et le signal AE autorise l'écriture dans la file du mot K, ce qui est effectué par le signal HE dont le front montant apparaît au milieu du temps octet.

Quand le signal FPN est à "1", indiquant que la zone ZA de la file FPT0 est pleine, la sortie de la porte P2 ne peut être à "1" que si le fil p1 est à "1". Il n'y aura donc autorisation d'écriture (AE = 1) que si le paquet concerné a une priorité sémantique de haut niveau (p = 1). Chaque mot K correspondant à un tel paquet prioritaire incident et destiné à la sortie S0 est écrit et décalé dans la file FPT0, mais se retrouve dans la zone ZT. Les mots K correspondant à des paquets à priorité sémantique de bas niveau ne sont, dans ce cas, pas écrits dans la file FPT0, bien qu'ils aient une priorité temporelle de haut niveau. Le contenu de ces paquets dans la mémoire MP sera perdu.

En ce qui concerne la file FSPT0, il en est de même, c'est-à-dire que, quand la zone ZA' est pleine, le signal FPN' ne permet plus, par la porte ET P2', que l'écriture de paquets à priorité sémantique de haut niveau.

Le signal e est un mot de quatre bits dont la valeur varie cycliquement de 0 (0000) à 15 (1111) au rythme octet pour explorer respectivement les files FC15 à FC0 afin de transmettre des adresses de lecture à la mémoire tampon MP à travers le multiplexeur MX. Le signal BT1 est aussi un mot de quatre bits qui prend les mêmes valeurs que le signal e, mais avec une avance d'un demi-temps octet. On verra dans la suite comment est utilisé le signal BT1.

Avant d'examiner plusieurs cas significatifs de remplissage des files FPT0 et FSPT0, on va décrire le fonctionnement du circuit d'exploration SCA, Fig. 6. On suppose tout d'abord qu'aucune des files FPT0 et FSPT0 n'est vide. Dans ce cas les deux sorties FNV0 et FNV'0 sont à "1". Au moment où le signal BT1 prend la valeur 0000, les signaux FNV0 et FNV'0 sont respectivement transmis aux bascule VP et VP', par l'intermédiaire des multiplexeurs MNV et MNV'. Les bascules VP et VP' recopient ces signaux, dans ce cas à "1", sur le front montant du signal HD. Le diagramme du signal SVP ou SVP' est montré à la Fig. 7a. Quand e = 0000, les signaux SVP et SVP' sont respectivement délivrés par les démultiplexeurs DMF et DMF', à leurs sorties respectives VS0 et VS'0. Le signal VS0, à "1", inhibe la porte P6 tandis qu'il est transmis à la porte OU P5 et aux portes ET P7. D'une part, le signal appliqué à l'entrée d'autorisation de décalage AL passe à "1" et, d'autre part, les portes ET P7 appliquent le mot d'adresse AD(0-7) et le bit SP au multiplexeur MX qui les transmet car le signal e appliqué à son entrée de commande a aussi la valeur 0000. Comme le montre le diagramme "VS0 et AL" de la Fig. 7a, le signal AL reste à "1" pendant le temps d'octet e = 0000 et, sur le front montant de HD inclus dans ce temps, un décalage est effectué dans la file et le mot présent en sortie de la file FPT0 est remplacé par le suivant.

Par ailleurs, la porte P6, inhibée, n'a pas permis de faire passer au niveau "1" l'entrée AL' de la file FSPT0. Donc le mot présent à la sortie de celle-ci n'a pas été émis par le multiplexeur MX et il n'y a eu aucun décalage dans la file FSPT0.

En supposant maintenant que la file FPT0 est vide tandis que la file FSPT0 n'est pas vide. Le signal FNV0 est à "0" et le signal FNV'0 à "1". Le fonctionnement des multiplexeurs MNV et MNV', des bascules VP et VP' et des démultiplexeurs DMF et DMF' montre qu'au temps e = 0000, le signal VS0 est à "0" et le signal VS'0 à "1". Donc l'entrée AL reste à "0", les portes P7(0-8) sont inhibées tandis que la porte P6 est ouverte entraînant la mise à "1" de l'entrée AL' et l'ouverture des portes P'7(0-8). Le multiplexeur MX transmet le mot présent à la sortie de la file FSPT0 qui subit un décalage sur le front montant de HD.

En conclusion, les adresses présentes dans la file FPT0 sont temporellement prioritaires par rapport à celles qui sont dans la file FSPT0, laquelle n'est lue, à travers le multiplexeur MX, que quand la file FPT0 est vide.

On notera que les signaux SP et SP' sont transmis à travers le multiplexeur MX pour donner le signal pr qui est utilisé pour les opérations d'écriture dans la mémoire d'état MAP, comme on l'a décrit en relation avec la Fig. 2.

Dans la suite, on va examiner six cas significatifs de remplissage de la file FPT0 afin d'illustrer le traitement des paquets à priorité sémantique de haut et bas niveau dans cette file. A titre d'exemple, on va supposer que la capacité de la zone active ZA de la file est de 16 mots, bien que cela ne soit pas obligatoire, la capacité de la zone de transit ZT étant par exemple de 8 mots. Le remplissage de la file FSPT0 selon ces six cas significatifs serait traité, suivant l'invention, de la même manière et la description détaillée du traitement ferait double emploi avec celle qui concerne la file FPT0.

Comme le montre la Fig. 7b, qui concerne un premier cas de fonctionnement, on suppose que, dans la file FPT0, trois mots A, B* et C ont été successivement écrits, le signe * indiquant que le mot considéré a un haut niveau de priorité sémantique. Le signal FPN est donc dans ce cas à "0" et le signal FNV0 à "1". Comme dans toute file, le mot A et le bit SP sont disponibles à la sortie de la file, ce qui veut dire qu'il est présent aux entrées correspondantes des portes P7(0-8) qui seront ouvertes au temps e = 1111. Au même temps octet, le contenu du mot A est transmis, par le multiplexeur MX, sur la sortie AD(0-7) du multiplexeur MX vers l'entrée d'adresse de lecture de la mémoire MP. On a décrit cidessus comment le signal FNV0 permettait de mettre l'entrée AL à "1" et comment le front montant de HL, dans ce temps d'octet e = 1111, provoquait un décalage dans la file pour remplacer le mot A par le mot B*, tandis que le mot C prend la seconde place. Ainsi, dans ce premier cas de fonctionnement, le mot A a été lu à travers le multiplexeur MX, puis a été évacué de la file FPT0 par une opération de décalage. Le diagramme temporel AD(0-7) de la Fig. 7a montre qu'au temps d'octet e = 0000, le multiplexeur MX transmet le mot lu dans l'une des files du circuit CT15.

A la Fig. 8b, qui illustre avec la Fig. 8a un second cas de fonctionnement, on a représenté trois états successifs de la file FPT0 aux temps d'octet t0 (e = 1110), t0 + 1 (e = 1111) et t0 + 2 (e = 0000). Au temps t0, la zone d'attente ZA est pleine et contient les mots A, B, C*, etc., X*, et la zone de transit ZT contient un mot P*, qui a évidemment une priorité sémantique de haut niveau. Parmi les diagrammes temporels de la Fig. 8a, on a également montré la succession des temps t0, t0 + 1 et t0 + 2. Au passage du temps t0 au temps t0 + 1, comme dans le cas précédent illustré aux Figs. 7a et 7b, le mot A est lu à travers le multiplexeur MX, puis, vers la fin du temps t0 + 1, il est évacué de la file et remplacé par le mot B. C'est l'état t0 + 1 de la Fig. 8b.

En fait, au temps t0, le signal PP est à "1" ainsi que le signal FNV0. Quand e prend la valeur 1111, la bascule B1 reçoit le signal VS0 du multiplexeur DMF et recopie le signal PP à "1", ce qui a pour effet de mettre la bascule B2 également à "1" par SB1. Au temps t0 + 1, sur le front montant de HL, c'est-à-dire au moment où le mot A est évacué de la file, la bascule B3 recopie l'état pp1 de la bascule B2 et fait passer l'état pp2 à "1". Au temps t0 + 2, le mot B, qui a pris la place de A, n'étant pas prioritaire, le signal SP est à "1" si bien que la porte P4, avec ses deux entrées à "1", maintient, à travers la porte OU P5, le signal AL à "1". Donc, au prochain front montant du signal HL, c'est-à-dire vers la fin du temps t0 + 2, le mot B est évacué par décalage de la file FPT0. A la fin du temps t0 + 2, comme le montre la Fig. 8b, le contenu de la file est donc C*, etc., X*, P*.

Il faut noter que le mot B n'a pas traversé le multiplexeur MX, car au temps t0 + 1, le signal e avait la valeur 1111 et le multiplexeur MX, par les portes P7(0-7) ou P'7(0-7), reliait la sortie de la file FPT15 ou FSPT15 à sa sortie AD(0-7). Le paquet qui est mémorisé à l'adresse B dans la mémoire tampon MP ne sera donc pas transmis la jonction sortante S0. Si ce paquet est uniquement destiné à cette jonction S0, il est perdu, mais s'il s'agissait d'un paquet destiné à être diffusé sur plusieurs jonctions autres que S0, il reste disponible dans les files d'attente associées à ces autres jonctions.

Par ailleurs, dès que le mot A a été évacué de la file FPT0, le mot P* passe de la zone de transit ZT dans la zone d'attente ZA, si bien que le signal PP passe à "0". La sortie de l'inverseur I est alors à "1", comme le signal SP, puisque le mot B n'a pas un haut niveau de priorité sémantique, si bien qu'au prochain front montant de HL, la sortie RAZ de la porte P2 remet la bascule B1 à "0". Au front montant suivant de HD, la bascule B2 dont l'entrée de données est à "0" recopie cet état qui est aussi recopié par la bascule B3 au prochain front montant de HD, c'est-à-dire à la fin du temp t0 + 1. Ainsi, au début du temps t0 + 2, la zone ZT est vide et l'ensemble des bascules B1 à B3 est à l'état de repos, le circuit CT0 peut donc continuer à fonctionner comme dans le premier cas illustré par les Figs. 7a et 7b.

Au temps t0 + 17, non montré, le mot C* sera normalement lu à travers le multiplexeur MX et évacué de la file FPT0.

A la Fig. 9b, qui illustre avec la Fig. 9a un troisième cas de fonctionnement, on a représenté trois états successifs de la file FPT0 aux temps d'octet t0 (e = 1110), t0 + 1 (e = 1111) et t0 + 2 (e = 0000). Au temps t0, la zone d'attente ZA est pleine et contient les mots A*, B, C*, etc., X*, et la zone de transit ZT contient un mot P*. Dans les diagrammes temporels de la Fig. 10a, on a également montré la succession de ces temps. Au passage du temps t0 au temps t0 + 1, le mot A* est normalement lu à travers le multiplexeur MX, puis, vers la fin du temps t0 + 1, il est évacué de la file et remplacé par le mot B. C'est l'état t0 + 1 de la Fig. 9b.

En fait, au temps t0, le signal PP est à "1" ainsi que le signal FNV0. Quand e prend la valeur 1111, la bascule B1 reçoit le signal VS0 du démultiplexeur DMF et recopie le signal PP à "1", ce qui a pour effet de mettre la bascule B2 également à "1" par SB1. Au temps t0 + 1, sur le front montant de HL, c'est-à-dire au moment où le mot A* est évacué de la file, la bascule B3 recopie l'état pp1 de la bascule B2 et fait passer l'état pp2 à "1". Au temps t0 + 1, le mot B, qui a pris la place de A*, n'étant pas prioritaire, le signal SP passe à "1", si bien que la porte P4, avec ses deux entrées à "1", maintient AL à "1", à travers la porte P5. Donc, au prochain front montant du signal HL, c'est-à-dire vers la fin du temps t0 + 2, le mot B est évacué par décalage de la file FPT0, mais il n'a pas été transmis par le multiplexeur MX. A la fin du temps t0 + 2, le contenu de la file est donc C*, etc., X*, P*. Au temps t0 + 17, non montré, le mot C* sera normalement lu à travers le multiplexeur MX et évacué de la file.

La remise à l'état initial des bascules B1 à B3 s'effectue comme dans le second cas décrit ci-dessus.

Le troisième cas de fonctionnement est donc pratiquement le même que le second, mais il était utile de le décrire pour faire comprendre que quel que soit l'état d'une file FPTi ou FSPTi au moment où le signal e prend la valeur i, le mot qui est présent à sa sortie, sémantiquement prioritaire ou non, est lu à travers le multiplexeur MX et sert à faire transmettre un paquet de la mémoire tampon MP vers la jonction sortante Si.

A la Fig. 10b, qui illustre, avec la Fig. 10a, un quatrième cas de fonctionnement, on a représenté quatre états successifs de la file FPT0 aux temps d'octet t0 (e = 1110), t0 + 1 (e = 1111), t0 + 17 (e = 1111) et t0 + 18 (e = 0000). Au temps t0, la zone d'attente ZA est pleine et contient les mots A, B*, C, D, etc., X, et la zone de transit ZT contient un mot, évidemment prioritaire, P*. Dans les diagrammes temporels de la Fig. 10a, on a également montré ces temps d'octet. Au passage du temps t0 au temps t0 + 1, le mot A est normalement lu à travers le multiplexeur MX puis, vers la fin du temps t0 + 1, il est évacué de la file et remplacé par le mot B*, qui est prioritaire.

En fait, au temps t0, le signal PP est à "1" ainsi que le signal FNV0. Quand e prend la valeur 1111, la bascule B1 reçoit le signal VS0 du démultiplexeur DMF et recopie le signal PP à "1", ce qui a pour effet de mettre la bascule B2 également à "1" par SB1. Au temps t0 + 1, sur le front montant de HL, c'est-à-dire au moment où le mot A est évacué de la file, la bascule B3 recopie l'état pp1 de la bascule B2 et fait passer l'état pp2 à "1". Le mot B*, qui a pris la place de A, étant prioritaire, le signal SP passe à "0" si bien que la sortie de la porte P4 reste à "0", ce qui, à travers la porte P5, ramène le signal AL à "0". Donc, aux prochains fronts montants de signal HL, jusqu'à t0 + 17, le mot B* ne peut être évacué. Pendant ce temps, le signal PP est revenu à "0" et la première entrée de la porte P3 est à "1", mais comme le signal SP est à "0", puisque le mot B* est prioritaire, la bascule B1 n'est pas remise à "0" par son entrée RAZ et les états des bascules B2 et B3 ne changent pas.

Au temps t0 + 17, où e reprend la valeur 0000, le mot B* est lu à travers le démultiplexeur MX et, par MNV, VP et DMF, le signal VS0 est passé à "1", ce qui provoque l'évacuation du mot B*, si bien qu'au temps t0 + 17, le mot C apparaît à la sortie de la file. Si l'on suppose qu'entre le temps t0 et le temps t0 + 17, aucun mot n'a été écrit dans la file, on est ramené au premier cas de fonctionnement illustré aux Figs. 8a et 8b. Le mot C est lu au temps t0 + 33, etc.

En particulier, au temps t0 + 17, le signal VS0 a fait changer l'état de la bascule B1 puisque PP est à "0". Les bascules B2 et B3 sont donc remises à "0" au temps t0 + 18.

A la Fig. 11b, qui illustre, avec la Fig. 11a, un cinquième cas de fonctionnement, on a représenté quatre états successifs de la file FPT0 aux temps d'octet, t0 (e = 1110), t0 + 1 (e = 1111), t0 + 2 (e = 0000) et t0 + 3 (e = 0001). Au temps t0, la zone d'attente ZA est pleine et contient les mots A*, B, C, D, etc., X, et la zone de transit ZT contient deux mots, évidemment prioritaires, P* et Q*. Dans les diagrammes temporels de la Fig. 11a, on a également montré ces temps d'octet. Au passage du temps t0 au temps t0 + 1, le mot A* est normalement lu à travers le multiplexeur MX puis, vers la fin du temps t0 + 1, il est évacué de la file par le signal VS0 à "1" et remplacé par le mot B, non prioritaire. Donc au temps t0 + 1, le mot P* est entré dans la zone ZA, mais il reste le mot Q* dans la zone ZT.

En fait, au temps t0, le signal PP est à "1" ainsi que le signal FNV0. Quand e prend la valeur 1111, la bascule B1 recopie le signal PP à "1", ce qui a pour effet de mettre la bascule B2 également à "1", puis la bascule B3, comme décrit ci-dessus. Le mot B qui a pris la place de A*, n'étant pas prioritaire, le signal SP passe à "1", si bien que la porte P4 maintient le signal AL à "1". Donc, au temps t0 + 1, sur le front montant de HL, le mot B est évacué par décalage de la file. Pendant ce temps, le mot Q* étant toujours dans la zone de transit ZT, le signal PP est resté à "1", ce qui maintient l'état de la bascule B1 et donc des bascules B2 et B3. Au temps t0 + 3, comme le mot C n'est pas non plus prioritaire, le signal SP reste à "1" et la porte P4 maintient encore le signal AL à "1". Donc, sur le front montant de HL, le mot C sera également évacué, sans être transmis par le multiplexeur MX. A la fin du temps t0 + 3. le signal PP est remis à "0", car le mot Q* est entré dans la zone ZA. Les bascules B1 à B3 sont alors remises à l'état initial, comme précédemment décrit, et le fonctionnement se poursuit comme dans le premier cas.

A la Fig. 12b, qui illustre, avec la Fig. 12a, un sixième cas de fonctionnement, on a représenté cinq états successifs de la file FPT0 aux temps d'octet, t0 (e = 1110), t0 + 1 (e = 1111), t0 + 2 (e = 0000), t0 + 17 (e = 1111) et t0 + 18 (e = 0000). Au temps t0, la zone d'attente ZA est pleine et contient les mots A*, B, C*, D, etc., X, et la zone de transit ZT contient deux mots P* et Q*. Dans les diagrammes temporels de la Fig. 13a, on a également montré ces temps d'octet. Au passage du temps t0 au temps t0 + 1, le mot A* est normalement lu à travers le multiplexeur MX, puis, vers la fin du temps t0 + 1, il est évacué de la file par le signal VS0 à "1" et remplacé par le mot B, non prioritaire. Donc, au temps t0 + 1, le mot P* est entré dans la zone ZA, mais il reste toujours le mot Q* dans la zone ZT.

En fait, au temps t0, le signal PP est à "1" ainsi que le signal FNV0. Quand, au temps t0 + 1, e prend la valeur 1111, la bascule B1 recopie le signal PP à "1", ce qui met la bascule B2 également à "1", puis la bascule B3, comme décrit ci-dessus. Le mot B qui a pris la place du mot A*, n'étant pas prioritaire, le signal SP passe à "1", si bien que la porte P4 maintient le signal AL à "1". Donc, au temps t0 + 2, sur le front montant de HL, le mot B est évacué par décalage de la file. Pendant ce temps, le mot Q* étant toujours dans la zone de transit ZT, le signal PP était resté à "1", ce qui maintenait l'état de la bascule B1 et donc des bascules B2 et B3. Au temps t0 + 3, non montré, comme le mot C* est prioritaire, le signal PP passe à "0", ce qui bloque la porte P4. Le mot C* ne sera donc pas évacué sur le front montant de HL dans le temps t0 + 3, mais il sera lu à travers le multiplexeur MX au temps t0 + 17, quand e reprend la valeur 1111 qui fait délivrer le signal VS0 par le démultiplexeur DMF.

Par ailleurs, à la fin du temps t0 + 2, le mot Q* est entré dans la zone ZA alors que la zone ZT est devenue vide, ce qui fait passer le signal PP à "0". On est donc ramené au premier cas de fonctionnement en ce qui concerne la lecture des mots. Toutefois la bascule B1 avait gardé son état de travail, car le signal VS0 n'apparaît qu'au temps t0 + 17, et que la porte P3 est restée bloquée par le signal SP au niveau "0" indiquant que le mot C* est prioritaire. Au début du temps t0 + 17, les signaux SB1, pp1 et pp2 sont donc toujours à "1". Le signal VS0 remet la bascule B1 au repos et les bascules B1 et B2 changent successivement d'état comme on l'a décrit ci-dessus en relation avec le second cas illustré par les Figs. 8a et 8b.

Dans les exemples de fonctionnement précédents, on a supposé qu'au cours des fonctionnements, aucun nouveau mot n'entrait dans la file en cours de traitement. Il est bien évident que le cas peut se produire car, à chaque temps d'octet, un mot peut être écrit si le paquet entrant est destiné à la jonction sortante concernée. L'homme de métier, ayant pris connaissance de la description des six cas particuliers de fonctionnement, comprendra certainement que les circuits CT0 à CT15 les traiteraient de la même façon.

Dans l'exemple de réalisation du circuit d'aiguillage montré à la Fig. 6, le fil qui transmet le signal p1 est multiplé sur les entrées correspondantes des circuits CT0 à CT15. Quand il s'agit d'un paquet entrant dans le commutateur et destiné à une seule jonction de sortie, ce fil unique convient parfaitement. Quand il s'agit d'un paquet entrant qui est destiné à être diffusé, c'est-à-dire à être orienté vers plusieurs jonctions de sortie désignées par les fils individuels du faisceau s, le fil p1 unique implique que le paquet a ou non une priorité sémantique de haut niveau vers toutes ces jonctions. Pour le cas où l'on désire qu'un paquet diffusé soit sémantiquement prioritaire vers certaines jonctions sortantes et non prioritaire vers d'autres, il faut prévoir seize fils p1 individuellement affectés aux circuits CT0 à CT15, comme les fils du faisceau s.

Bien entendu, quand la zone ZA d'une file FPTi ou FSPTi est pleine d'adresses de paquets sémantiquement prioritaires et qu'il en arrive d'autres, ces derniers ne pourront pas être émis. Toutefois, la conception et le calcul des conditions de trafic permettent de rendre cette circonstance extrêmement rare, sauf accident. A ce sujet, il faut savoir que l'unité de commande UCC du commutateur est utilisée à chaque établissement de circuit virtuel et donc connaît la charge moyenne de chaque jonction sortante. En cas de trop nombreuses communications à haut niveau de priorité sémantique demandées vers une jonction sortante, cette unité peut en différer certains établissement pour éviter des engorgements.

## Revendications

1. Système de commutation de paquets d'information affectés de priorités sémantiques à deux niveaux entre des multiplex temporels entrants (E0 à E15) et des multiplex temporels sortants (S0 à S15), l'adresse de mémorisation (K) d'un paquet dans la mémoire tampon (MP) du système étant rangée dans chaque file d'attente (FPT0 à FPT15) associé à chaque multiplex temporel sortant (S0 à S15) destiné à transmettre le paquet, caractérisé en ce qu'il comprend une mémoire de champ d'états (MAP) dont les mots (Zi) comprennent chacun autant de bits que de multiplex temporels sortants (S0 à S15), les adresses de ladite mémoire de champ de points (MAP) correspondant à celles de ladite mémoire tampon (MP), chaque bit d'un mot (Zi) étant à "1" quand le paquet mémorisé à la même adresse que le mot et destiné au multiplex temporel sortant correspondant au bit a une priorité sémantique de haut niveau et n'a pas encore été transmis par le multiplex sortant concerné, chaque adresse de mémorisation de paquet étant choisies parmi les adresses de la mémoire de champ de points adressant des mots (Zi) dont tous les bits sont à "0".

2. Système suivant la revendication 1, caractérisé en ce que la mémoire de champ de points (MAP) est adressée en écriture pour y modifier le contenu d'un mot (Zi), soit à l'écriture à la même adresse dans la mémoire tampon (MP) d'un paquet à priorité sémantique de haut niveau, soit à la lecture à la même adresse dans la mémoire tampon (MP) d'un paquet à priorité sémantique de haut niveau, et adressée en lecture entre les adressages en écriture, chaque mot lu dans la mémoire de champ de points déclenchant, quand tous ses bits sont à "0", la sélection de leur adresse comme adresse libre d'écriture dans la mémoire tampon (MP).

3. Système suivant la revendication 1 ou 2, caractérisé en ce que chaque adresse libre de la mémoire de champ de points (MAP) est mémorisée dans une file d'adresses libres (ADL) dont la sortie délivre au rythme d'arrivée des paquets leurs adresses de mémorisation dans la mémoire tampon (MP).

4. Système suivant l'une des revendications 1 à 3, caractérisé en ce que la mémoire d'adresses libres (ADL) n'est pas lue quand le paquet entrant est un paquet vide.

5. Système suivant l'une des revendications 1 à 4, caractérisé en ce que ladite adresse de mémorisation est mémorisée dans chaque file d'attente (FPT0 à FT15) accompagnée d'un premier bit (p1) définissant le niveau de priorité sémantique du paquet, chaque file d'attente (FPT0 à FPT15) comprenant en série entre l'entrée et la sortie deux zones (ZT, ZA), l'écriture dans la première zone (ZT) n'étant, quand la seconde zone (ZA) est pleine, accessible qu'aux paquets de priorité sémantique de haut niveau, et, entre deux lectures de chaque file, des adresses de lecture de paquet de priorité sémantique de bas niveau, qui avaient été mémorisées plus tôt que l'adresse de lecture du paquet de priorité sémantique de haut niveau la plus ancienne encore présente dans la file, étant détruites en nombre égal, au maximum, au nombre d'adresses de lecture mémorisées dans la première zone (ZT).

6. Système suivant l'une des revendications 1 à 5, servant à commuter des paquets d'information non seulement affectés de priorités sémantiques à deux niveaux, mais également affectés de priorités temporelles à deux niveaux, caractérisé en ce que l'adresse de mémorisation est mémorisée dans chaque file d'attente accompagnée d'un premier bit (p1) définissant le niveau de priorité sémantique du paquet et d'un second bit (p2) définissant le niveau de priorité temporelle du paquet, chaque file d'attente se composant de deux files (FPTi et FNPTi), la mémorisation dans la première file (FPTi) ou dans la seconde file (FNPTi) étant déterminée par le second bit (p2), la première file (FPTi) mémorisant tous les paquets à priorité temporelle de haut niveau et la seconde file (FNPTi) n'étant lue que quand la première file (FPTi) est vide.

7. Système suivant l'une des revendication 1 à 6, caractérisé en ce que chaque mot de la mémoire de champ de points (MAP) correspond un bit dans une mémoire de test (MEM), ledit bit étant à "1" quand le mot correspondant contient au moins un bit à "1", ladite mémoire de test (MEM) étant lue à un rythme moyen sensiblement plus lent que la fréquence moyenne de séjour des paquets dans la mémoire tampon (MP), la lecture d'un bit à "1" dans la mémoire de test (MEM) entrainant l'écriture de l'adresse du mot correspondant de la mémoire de champ de points dans la file d'adresses (ADL).

8. Système suivant l'une des revendications 1 à 7, caractérisé en ce que la mémoire de champ de points (MAP) a son entrée de données reliée aux fils de sélection (s) d'autorisation d'écriture d'une adresse de mémorisation dans les files d'attente, lesdits fils étant rendus actifs pendant les seconds demi-temps d'octet du système, une entrée (w0 à w15) de validation d'écriture de bits reliée, d'une part, également auxdits fils de sélection (s) et, d'autre part, à la sortie de l'explorateur (N1) des multiplex temporels sortants (S0 à S15), cet explorateur (N1) étant validé pendant les premiers temps d'octet, par l'intermédiaire de premières portes ET (R20 à R215) qui sont rendues passantes individuellement par le bit de priorité sémantique (p1 ou pr) provenant soit de la mémoire de traduction d'étiquette du système, soit de la sortie de la file d'attente explorée, une entrée d'adresses reliée à la sortie d'un premier multiplexeur (N2) dont la première entrée est reliée à la sortie d'un compteur binaire cyclique (CPT1) et la seconde à la sortie d'un second multiplexeur (N3) dont la première entrée est reliée à la sortie de données des files d'attente et la seconde à la sortie de la file d'adresses (ADL), le premier multiplexeur (N2) étant commandé par ledit bit de priorité sémantique (p1 ou pr) et le second multiplexeur (N3) étant commandé par les signaux de seconds demi-temps d'octet, et une sortie de données (Zi) reliée aux entrées correspondantes d'une porte NON-ET (R5) dont la sortie est reliée à l'entrée d'autorisation d'écriture (AE) de la mémoire d'adresses (ADL) dont l'entrée de données est reliée à la sortie du compteur binaire cyclique (CPT1) et la sortie de données délivre les adresses de mémorisation (K).

**Patentansprüche**

1. Vermittlungssystem für Informationen mit semantischem Vorrang mit zwei Pegeln zwischen ankommenden Zeitmultiplexen (E0 bis E15) und abgehenden Zeitmultiplexen (S0 bis S15), wobei die Speicheradresse (K) eines Paketes in dem Pufferspeicher (MP) des Systems in jeder Wartereihe (EPT0 bis EPT15) angeordnet ist, die jedem abgenden, zum Übertragen des Paketes bestimmten Zeitmultiplex (S0 bis S15) zugeordnet ist, **dadurch gekennzeichnet**, daß das System einen Dezimalstellen-Speicher (MAP) enthält, dessen Wörter (Zi) jeweils so viele Bits enthalten wie die abgehenden Zeitmultiplexe (S0 bis S15), daß die Adressen des Dezimalstellen-Speichers (MAP) denen des Pufferspeichers (MP) entsprechen, daß jedes Bit eines Wortes (Zi) bei "1" ist, wenn das bei derselben Adresse wie das Wort gespeicherte und für das abgehende Zeitmultiplex bestimmte, einem Bit entsprechende Paket einen hohen semantischen Vorrangswert hat und noch nicht über das betroffene abgehende Multiplex übertragen wurde, und daß jede Speicheradresse des Paketes unter den Adressen des Dezimalstellen-Speichers ausgewählt wird, der die Wörter (Zi) adressiert, deren alle Bits bei "0" sind.

2. System nach Anspruch 1, **dadurch gekennzeichnet,** daß der Dezimalstellen-Speicher (MAP) für einen Schreibvorgang adressiert wird, um dort den Inhalt eines Wortes (Zi) zu ändern, entweder beim Schreiben eines Paketes mit hohem semantischem Vorrangswert bei derselben Adresse in dem Pufferspeicher (MP) oder beim Lesen eines Paketes mit hohem semantischem Vorrangswert bei derselben Adresse in dem Pufferspeicher (MP), und zwischen den Schreib-Adressierungen für einen Lesevorgang adressiert wird, daß jedes in dem Dezimalstellen-Speicher gelesene Wort dann, wenn alle seine Bits bei "0" sind, die Auswahl ihrer Adresse als freie Schreibadresse in dem Pufferspeicher (MP) auslöst.

3. System nach Anspruch 1 oder 2, **dadurch gekennzeichnet,** daß jede freie Adresse des Dezimalstellen-Speichers (MAP) in einer Reihe mit freien Adressen (ADL) gespeichert wird, deren Ausgang im Rhythmus des Eingangs der Pakete ihre Speicheradressen in den Pufferspeicher (MP) liefert.

4. System nach einen der Ansprüche 1 bis 3, **dadurch gekennzeichnet,** daß der Speicher (ADL) mit freien Adressen nicht gelesen wird, wenn das ankommende Paket ein leeres Paket ist.

5. System nach einem der Ansprüche 1 bis 4, **dadurch gekennzeichnet,** daß die Speicheradresse in jeder Wartereihe (FPT0 bis FT15) gespeichert wird, die von einem ersten Bit (p1) begleitet ist, das den semantischen Vorrangswert des Paketes bestimmt, daß jede Wartereihe (FPT0 bis FPT15) in Reihe zwischen dem Eingang und dem Ausgang zwei Zonen (ZT) enthält, daß der Schreibvorgang in der ersten Zone (ZT) dann, wenn die zweite Zone (ZA) voll ist, nur für Pakete mit hohem semantischem Vorrangswert zugänglich ist, und zwischen zwei Lesevorgängen jeder Reihe die Leseadressen des Paketes mit niedrigem semantischem Vorrangswert, die früher als die Leseadresse des Paketes mit hohem semantischem Vorrangswert gespeichert wurde, wobei die älteste noch in der Reihe anwesend ist, in gleicher Anzahl zerstört werden, maximal bis zur Zahl der in der ersten Zone (ZT) gespeicherten Leseadressen.

6. System nach einem der Ansprüche 1 bis 5 zur Vermittlung von Informationspaketen, die nicht nur semantische Vorrangswerte mit zwei Pegeln, sondern ebenso zeitliche Vorrangswerte mit zwei Pegeln auweisen, **dadurch gekennzeichnet,** daß die Speicheradresse in jeder Wertereihe gespeichert ist, die von einem ersten Bit (p1), das den semantischen Vorrangswert des Paketes bestimmt, und von einem zweiten Bit (p2) begleitet ist, das den zeitlichen Vorrangswert des Paketes bestimmt, daß jede Wartereihe aus zwei Reihen (FPTi und FNPTi) zusammengesetzt ist, daß die Speicherung in der ersten Reihe (FPTi) oder in der zweiten Reihe (FNPTi) durch das zweite Bit (p2) bestimmt ist, daß die erste Reihe (FPTi) alle Pakete mit hohem zeitlichem Vorrangswert speichert und die zweite Reihe (FNPTi) nur dann gelesen wird, wenn die erste Reihe (FPTi) leer ist.

7. System nach einem der Ansprüche 1 bis 6, **dadurch gekennzeichnet,** daß jedem Wort des Dezimalstellen-Speichers (MAP) ein Bit in einem Testspeicher (MEM) entspricht, daß dieses Bit bei "1" ist, wenn das entsprechende Wort wenigstens ein Bit bei "1" enthält, daß der Testspeicher (MEM) bei einem mittleren Rhythmus gelesen wird, der merklich langsamer ist als die mittlere Ruhefrequenz der Pakete in dem Pufferspeicher (MP), und daß das Lesen eines Bit bei "1" in dem Testspeicher (MEM) den Schreibvorgang der Adresse des entsprechenden Wortes des Dezimalstellen-Speichers in der Adreßreihe (ADL) auslöst.

8. System nach einem der Ansprüche 1 bis 7, **dadurch gekennzeichnet,** daß der Dezimalstellen-Speicher (MAP) mit seinem Dateneingang mit Selektionsleitungen (s) für die Schreibberechtigung einer Speicheradresse in den Wartereihen verbunden ist, daß die Leitungen während der zweiten Halbzeiten eines Oktalwortes des Systems aktiv gesteuert sind, daß ein Bit-Schreib-Validations-Eingang (w0 bis w15) einerseits gleichermaßen mit den Selektionsleitungen (s) und andererseits mit dem Ausgang des Abtasters (N1) der abgehenden Zeitmultiplexe (S0 bis S15) verbunden ist, daß der Abtaster (N1) während der ersten Oktalwortzeiten mittels erster AND-Gatter (R20 bis R215) wertig gesteuert wird, die individuell durch das Bit (p1 oder P2) für den semantischen Vorrang durchlässig gesteuert sind, das entweder von dem Speicher für die Label-Übertragung des Systems oder von dem Ausgang der ausgewerteten Wartereihe kommt, daß ein Adreß-Eingang mit dem Ausgang eines ersten Multiplexers (N2) verbunden ist, dessen erster Eingang mit dem Ausgang eines zyklischen Binärzählers (CPT1) und dessen zweiter Eingang mit dem Ausgang eines zweiten Multiplexers (N3) verbunden ist, dessen erster Eingang mit dem Datenausgang der Wartereihen und dessen zweiter Eingang mit dem Ausgang der Adreß-Reihe (ADL) verbunden ist, daß der erste Multiplexer (N2) durch das Bit (p1 oder pr) für den semantischen Vorrang und der zweite Multiplexer (N3) durch die Signale der zweiten Halbzeiten eines Oktalwortes gesteuert ist, und daß ein Datenausgang (Zi) mit dem entsprecheden Eingängen eines NAND-Gatters (R5) verbunden ist, dessen Ausgang mit dem Schreibberechtigungs-Eingang (AE) des Adreßspeichers (ADL) verbunden ist, dessen Dateneingang mit dem Ausgang des zyklischen Binärzählers (CPT1) verbunden ist und dessen Datenausgang die Speicheradressen (K) liefert.

## Claims

1. A system of switching packets of information affected by semantic priorities with two levels between incoming time multiplexes (E0 to E15) and outgoing time multiplexes (S0 to S15), the memorization address (k) of a packet in the buffer memory (MP) of the system being arranged in each waiting file (FPT0 to FPT15) associated with each outgoing time multiplex (S0 to S15) intended to transmit the packet, characterised in that it comprises a field of states memory (MAP) the words (Zi) of which each comprise as many bits as outgoing time multiplexes (S0 to S15), the addresses of the said field of points memory (MAP) corresponding to those of the said buffer memory (MP), each bit of a word (Zi) being at "1" when the packet memorized at the same address as the word and intended for the outgoing time multiplex corresponding to the bit has a semantic priority of high level and has not yet been transmitted by the outgoing multiplex concerned, each packet memorization address being chosen from among the addresses of the field of points memory addressing words (Zi) all the bits of which are at "0".

2. A system according to claim 1, characterised in that the field of points memory (MAP) is addressed in writing in order to modify there the contents of a word (Zi), either on writing to the same address in the buffer memory (MP) of a packet with semantic priority of high level or on reading at the same address in the buffer memory (MP) of a packet with semantic priority of high level and addressed in reading between the addressings in reading, each word read in the field of points memory starting, when all its bits are at "0", the selection of their address as free writing address in the buffer memory (MP).

3. A system according to claim 1 or 2, characterised in that each free address of the field of points memory (MAP) is memorized in a file of free addresses (ADL) the output of which delivers at the arrival rhythm of the packets their memorization addresses in the buffer memory (MP).

4. A system according to one of claims 1 to 3, characterised in that the memory of free addresses (ADL) is not read when the incoming packet is an empty packet.

5. A system according to one of the claims 1 to 4, characterised in that the said memorization address is memorized in each waiting file (FPT0 to FT15) accompanied by a first bit (p1) defining the level of semantic priority of the packet, each waiting file (FPT0 to FPT15) comprising in series between the input and the output, two zones (ZT, ZA), the writing in the first zone (ZT), when the second zone (ZA) is full, being accessible only to the packets of semantic priority of high level and between two readings of each file, packet reading addresses of semantic priority of low level which had been memorized earlier than the reading address of the packet of semantic priority of high level the oldest still present in the file being destroyed equal in number at a maximum to the number of reading addresses memorized in the first zone (ZT).

6. A system according to one of the claims 1 to 5 serving to switch packets of information not only affected by semantic priorities with two levels but likewise affected by time priorities with two levels, characterised in that the memorization address is memorized in each waiting file accompanied by a first bit (p1) defining the level of semantic priority of the packet and a second bit (p2) defining the level of time priority of the packet, each waiting file comprising two files (FPTi and FNPTi), the memorization in the first file (FPTi) or in the second file (FNPTi) being determined by the second bit (p2), the first file (FPTi) memorizing all the packets with time priority of high level and the second file (FNPTi) only being read when the first file (FPTi) is empty.

7. A system according to one of the claims 1 to 6, characterised in that with each word of the field of points memory (MAP) corresponds one bit in a test memory (MEM), the said bit being at "1" when the corresponding word contains at least one bit at "1", the said test memory (MEM) being read at an average rhythm substantially slower than the average staying frequency of the packets in the buffer memory (MP), the reading of a bit at "1" in the test memory (MEM) producing the writing of the address of the corresponding word of the field of points memory in the file of addresses (ADL).

8. A system according to one of the claims 1 to 7, characterised in that the field of points memory (MAP) has its data input connected to the authorization of writing selection wires (s) of a memorization address in the waiting files, the said wires being rendered active during the second octet half times of the system, a validation of writing bits input (w0 to w15) connected, on the one hand, likewise to the said selection wires (s) and on the other hand, to the output of the scanner (N1) of the outgoing time multiplexes (S0 to S15), this scanner (N1) being validated during the first octet times by the intermediary of first AND gates (R20 to R215) which are rendered busy individually by the bit of semantic priority (pl or pr) originating either from the label translation memory of the system or from the output of the waiting file scanned, an address input connected to the output of a first multiplexer (N2) the first input of which is connected to the output of a cyclic binary counter (CPT1) and the second to the output of a second multiplexer (N3) the first input of which is connected to the data output of the waiting files and the second to the output of the addresses file (ADL), the first multiplexer (N2) being commanded by the said bit of semantic priority (pl or pr) and the second multiplexer (N3) being controlled by the signals of second octet half times and a data output (Zi) connected to the corresponding inputs of a NO-AND gate (R5) the output of which is connected to the writing authorization input (AE) of the addresses memory (ADL) the data input of which is connected to the output of the cyclic binary output (CPT1) and the data output delivers the memorization addresses (K).

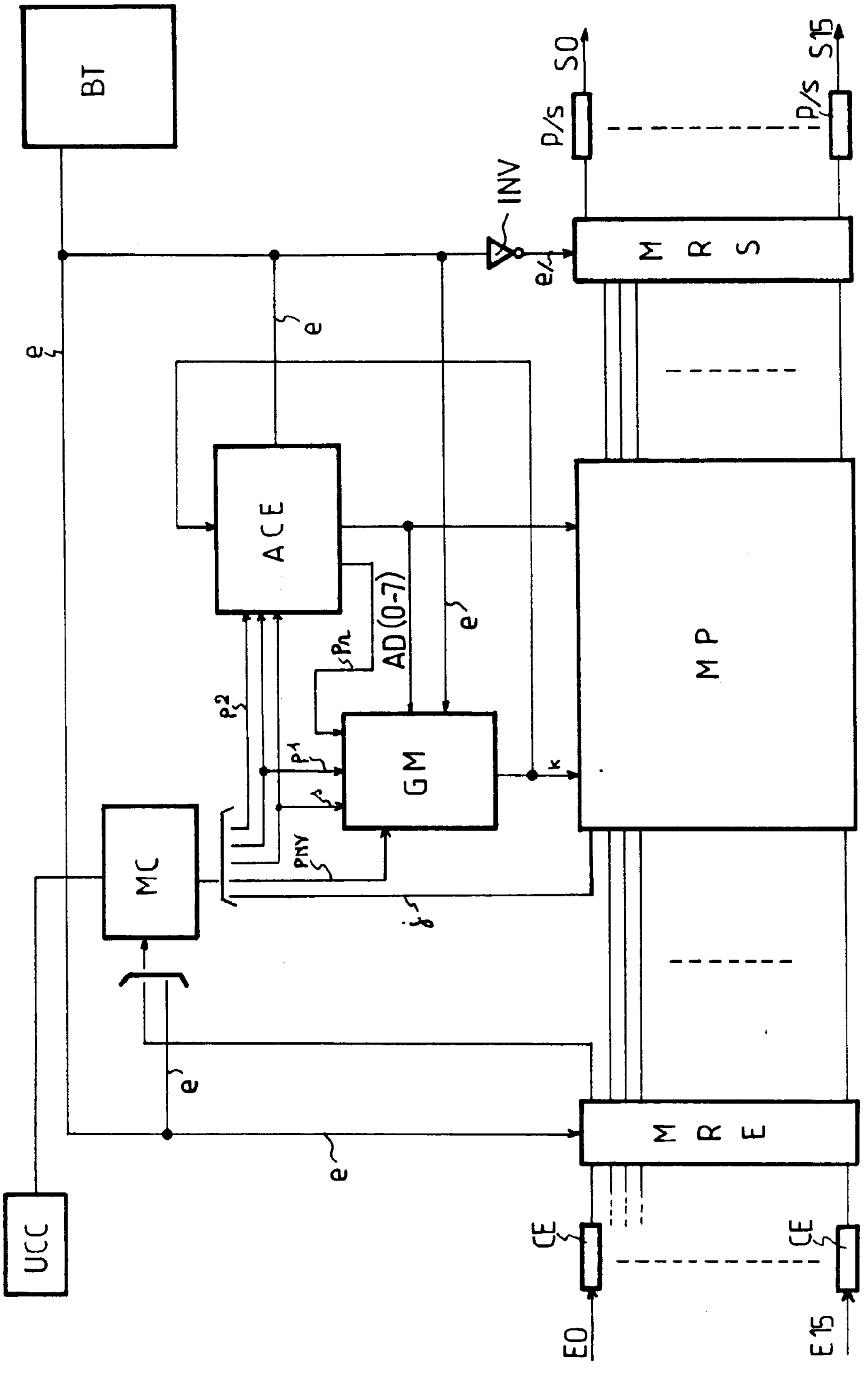
BT
UCC
MC
ACE
GM
M P
M R S
M R E
INV
P/S
S0
S15
CE
E0
E 15
e
AD(0-7)
P2
P1
PMV
K

FIG.1

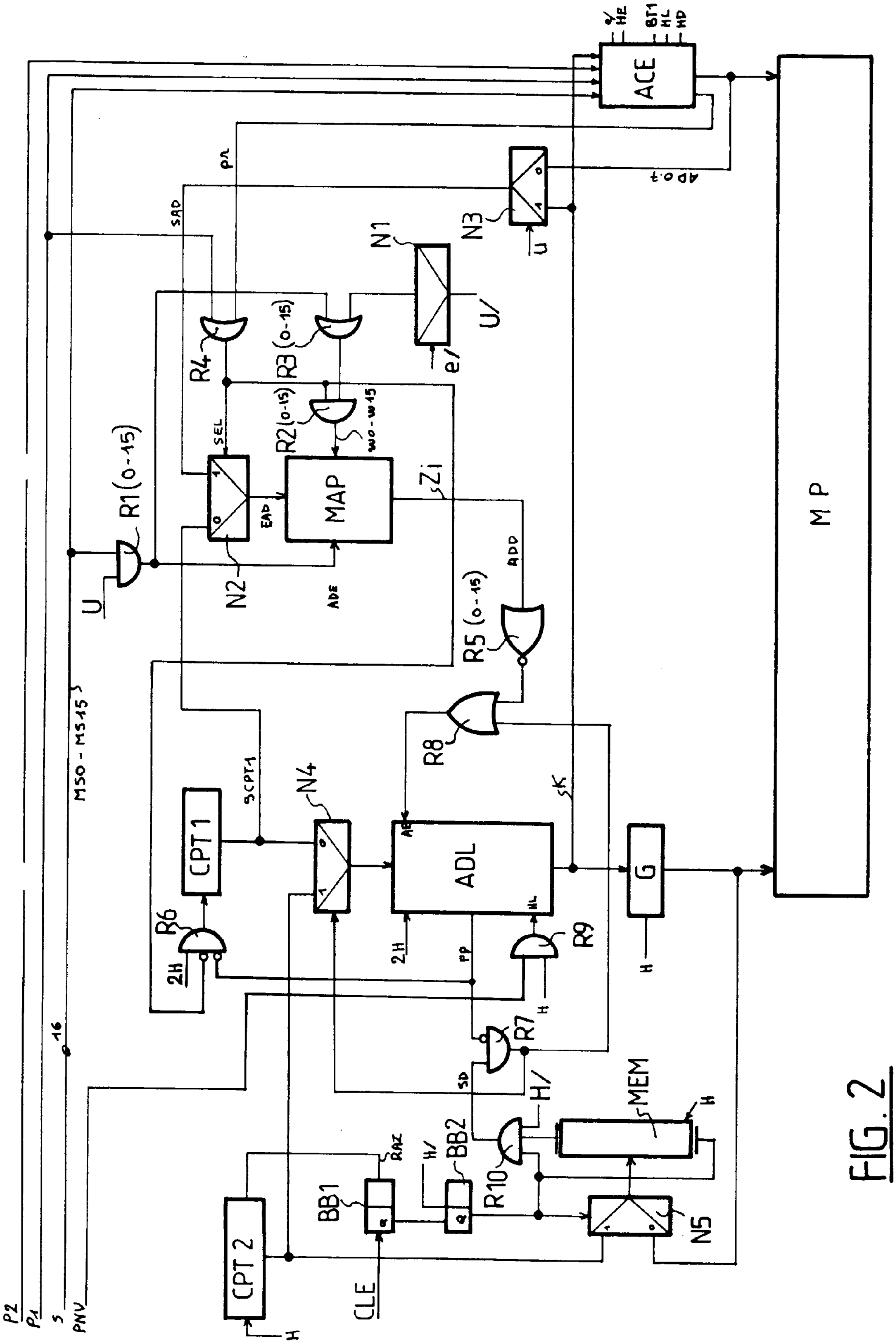
ACE
MP
MAP
ADL
CPT 1
CPT 2
MEM
G
N1
N2
N3
N4
N5
R1 (0-15)
R2 (0-15)
R3 (0-15)
R4
R5 (0-15)
R6
R7
R8
R9
R10
BB1
BB2
CLE
P2
P1
S
PNV
MS0 - MS15
U
U/
e/
SEL
SAD
EAD
ADE
ADD
Zi
W0 - W15
SCPT1
SK
SD
PP
2H
H
H/
RAZ
16

FIG. 2

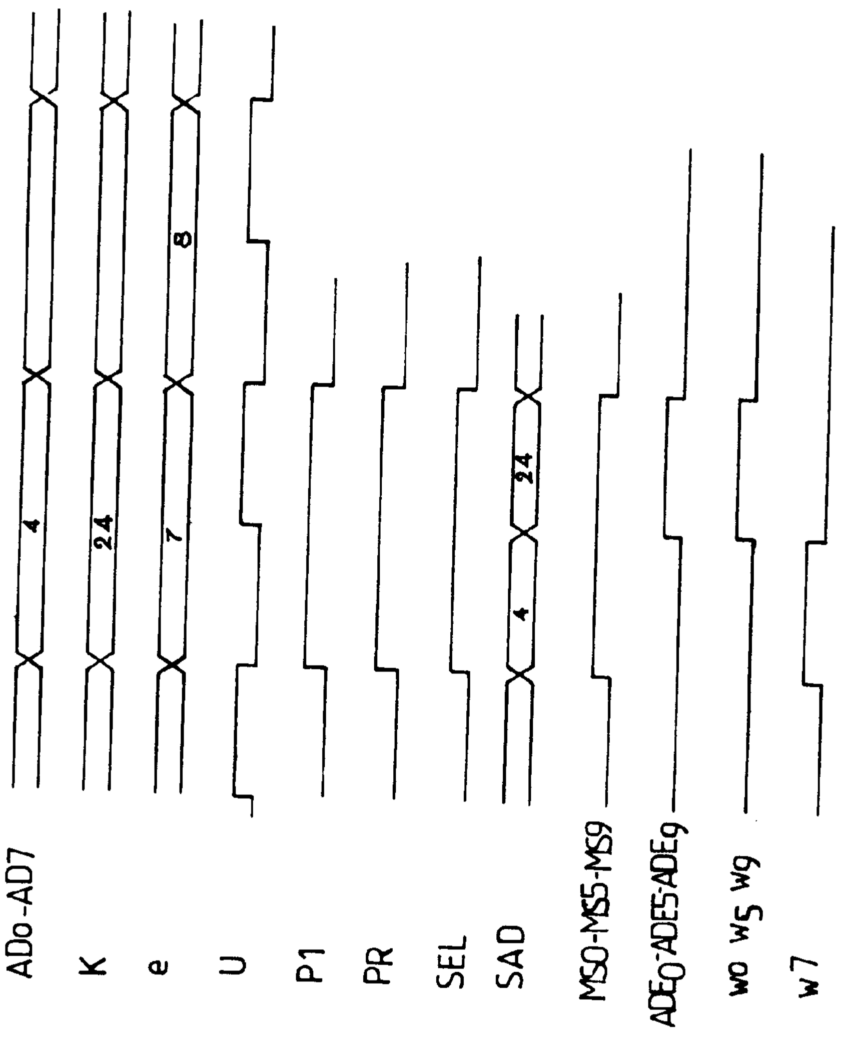
ADo-AD7
K
e
U
P1
PR
SEL
SAD
MS0-MS5-MS9
ADE0-ADE5-ADE9
w0 w5 w9
w7
4
24
7
8
4
24

FIG. 3

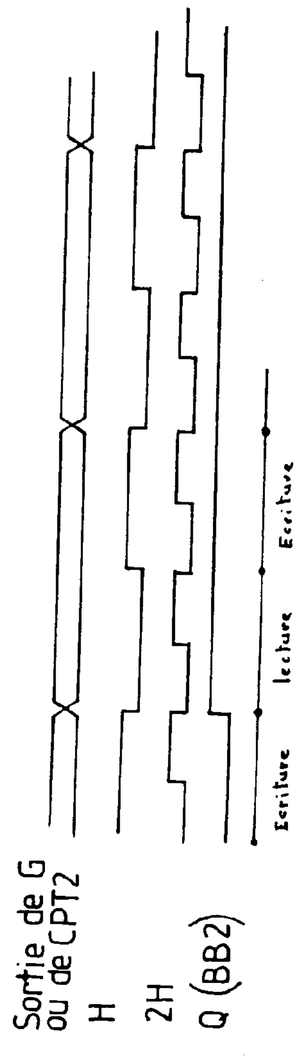
Sortie de G
ou de CPT2
H
2H
Q (BB2)
Ecriture
lecture
Ecriture

FIG. 4

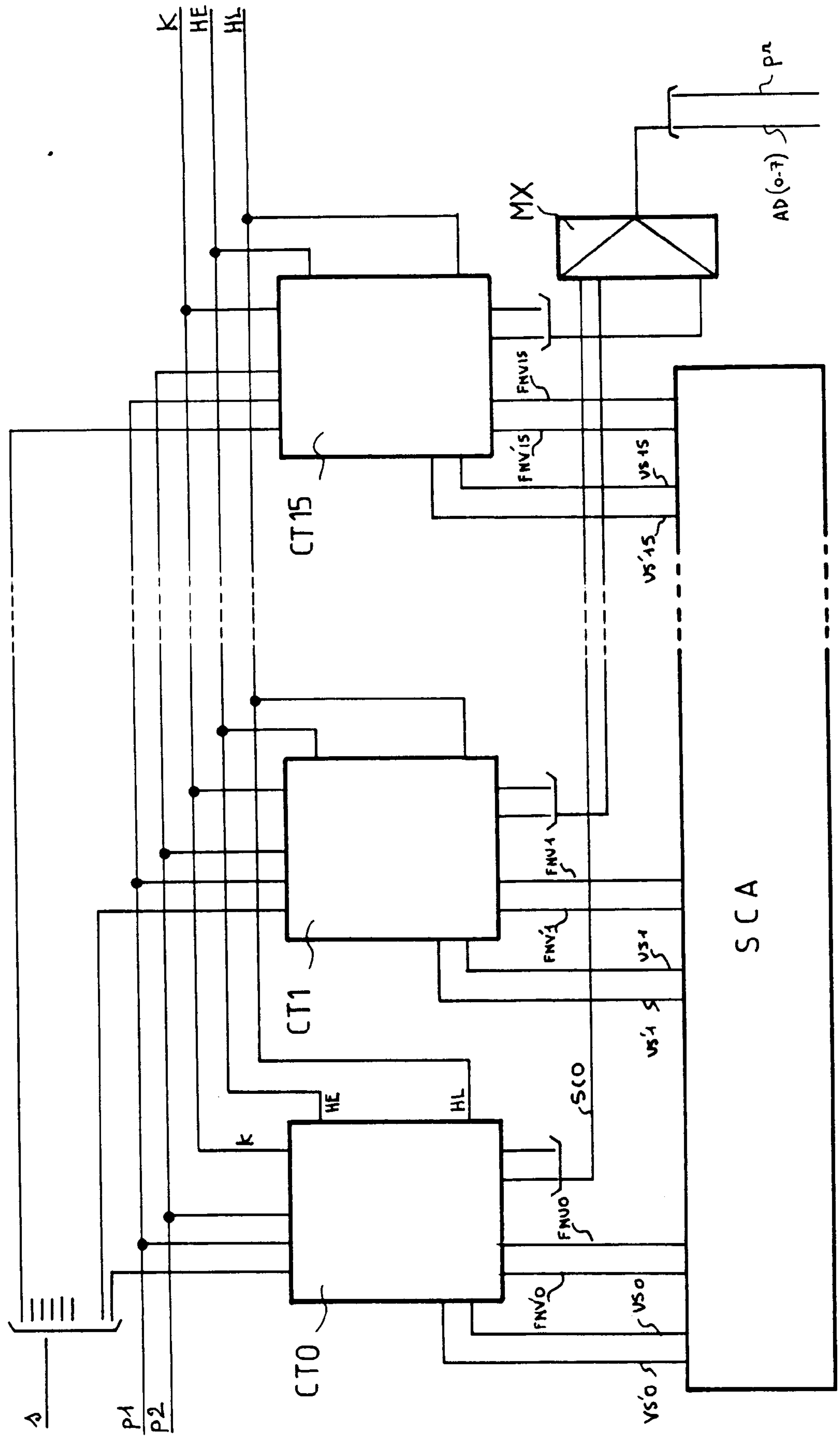
K
HE
HL
pr
AD(o-7)
MX
CT15
FNV15
FNV'15
VS15
VS'15
CT1
FNV1
FNV'1
VS1
VS'1
SCO
CT0
FNV0
FNV'0
VS0
VS'0
SCA
P1
P2

FIG. 5

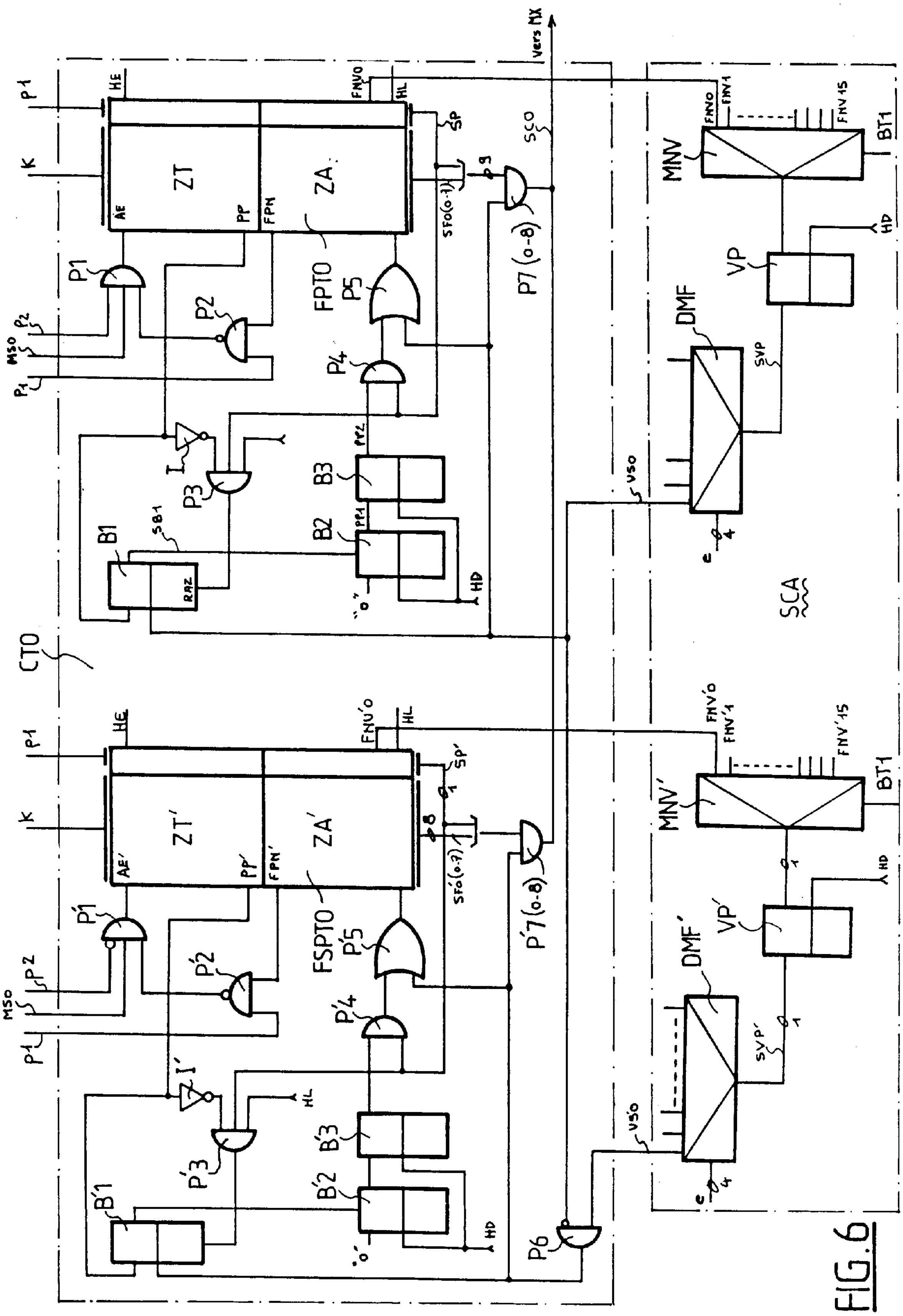
vers MX
CTO
SCA
ZT
ZA
ZT'
ZA'
P1
P2
P3
P4
P5
P6
P7(0-8)
P'1
P'2
P'3
P'4
P'5
P'7(0-8)
B1
B2
B3
B'1
B'2
B'3
I
I'
FPTO
FSPTO
MNV
MNV'
DMF
DMF'
VP
VP'
SCO
SB1
SVP
SVP'
VSO
VS'O
BT1
HD
HL
HE
K
MSO

FIG.6

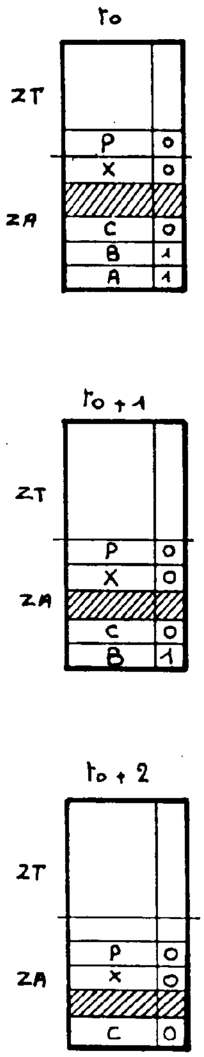


FIG.8b

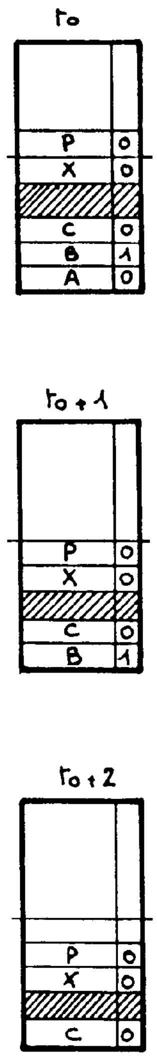


FIG.9b

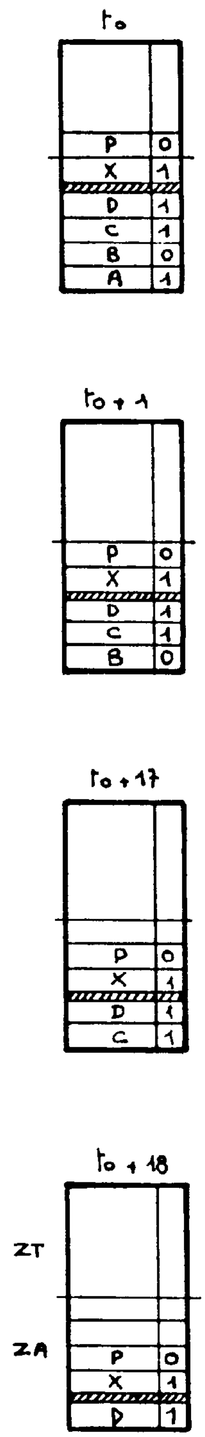


FIG.10b

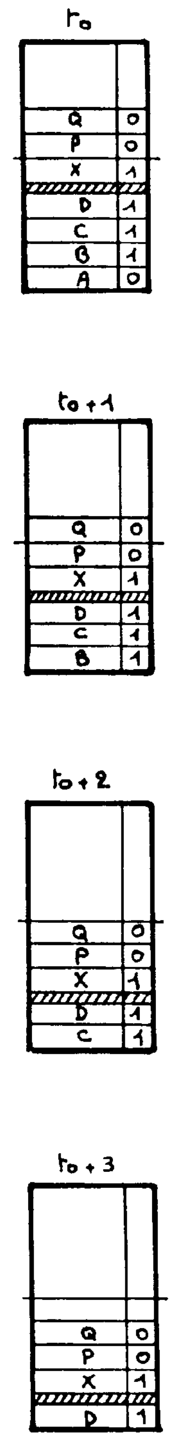


FIG.11b

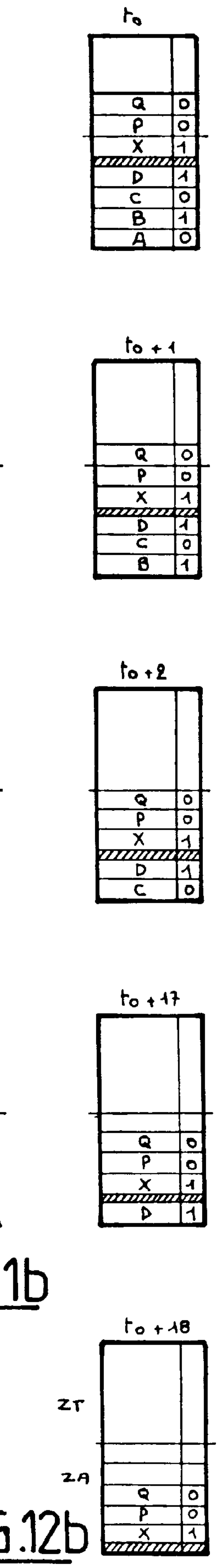


FIG.12b

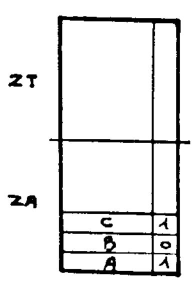


FIG.7b

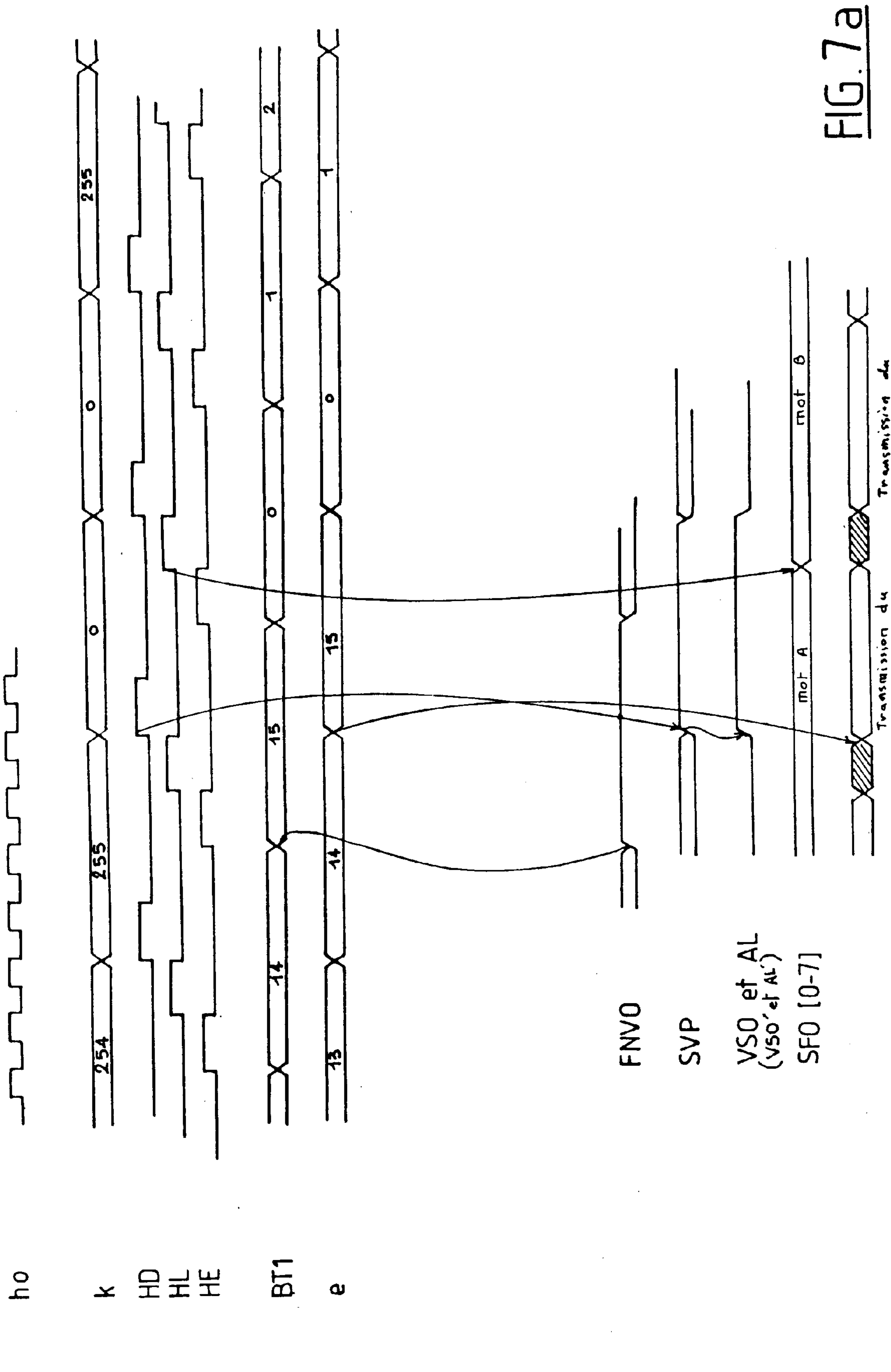
ho
k
HD
HL
HE
BT1
e
FNVO
SVP
VSO et AL
(VSO' et AL')
SFO [0-7]
254
255
0
0
255
13
14
15
15
0
1
14
15
0
1
1
2
mot A
mot B
Transmission du mot A de FCO
Transmission du mot x de Fc 15

FIG. 7a

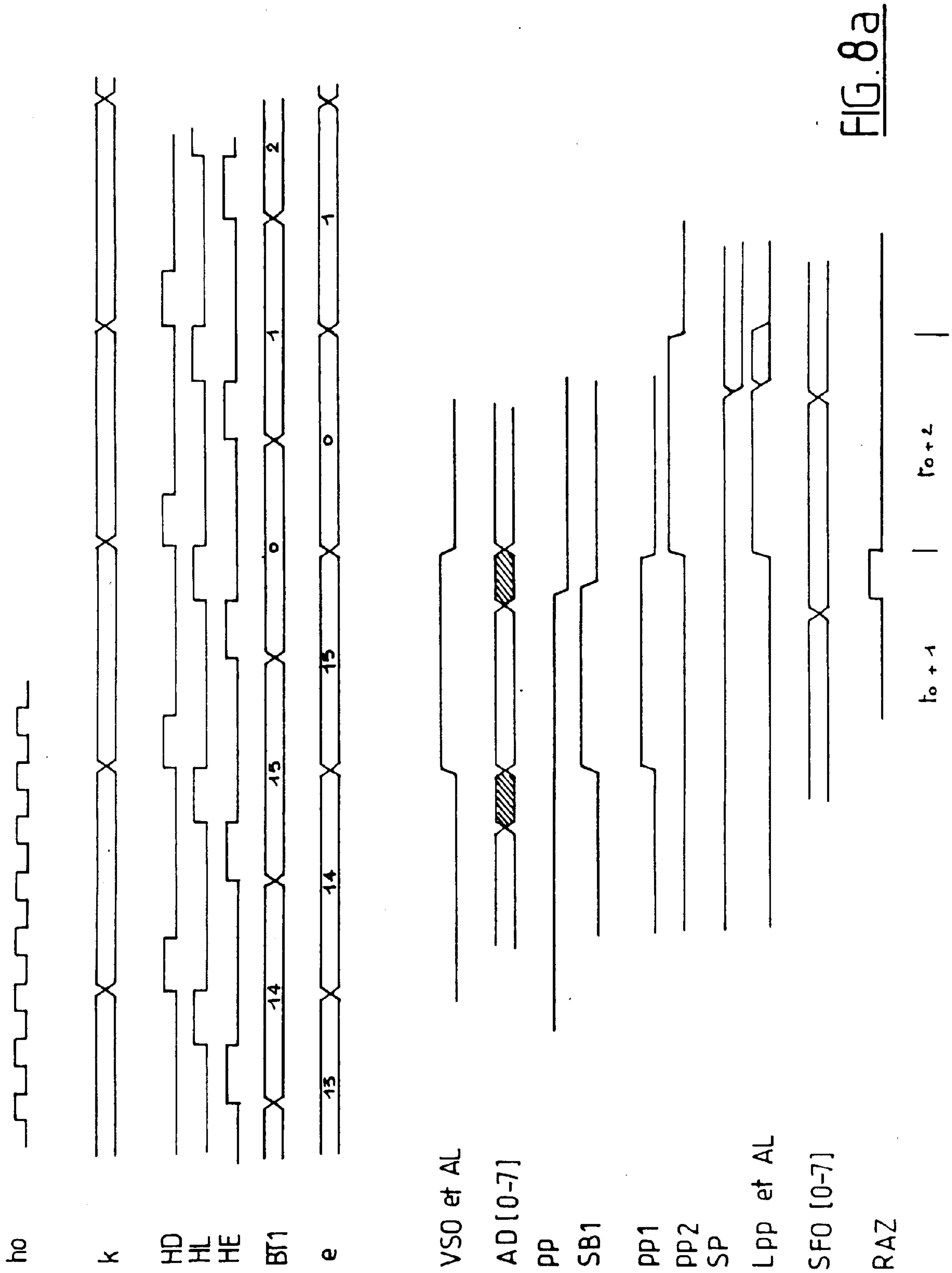
ho
k
HD
HL
HE
BT1
e
13
14
15
0
1
2
VSO et AL
AD [0-7]
pp
SB1
PP1
PP2
SP
Lpp et AL
SFO [0-7]
RAZ
to + 1
to + 2

FIG. 8a

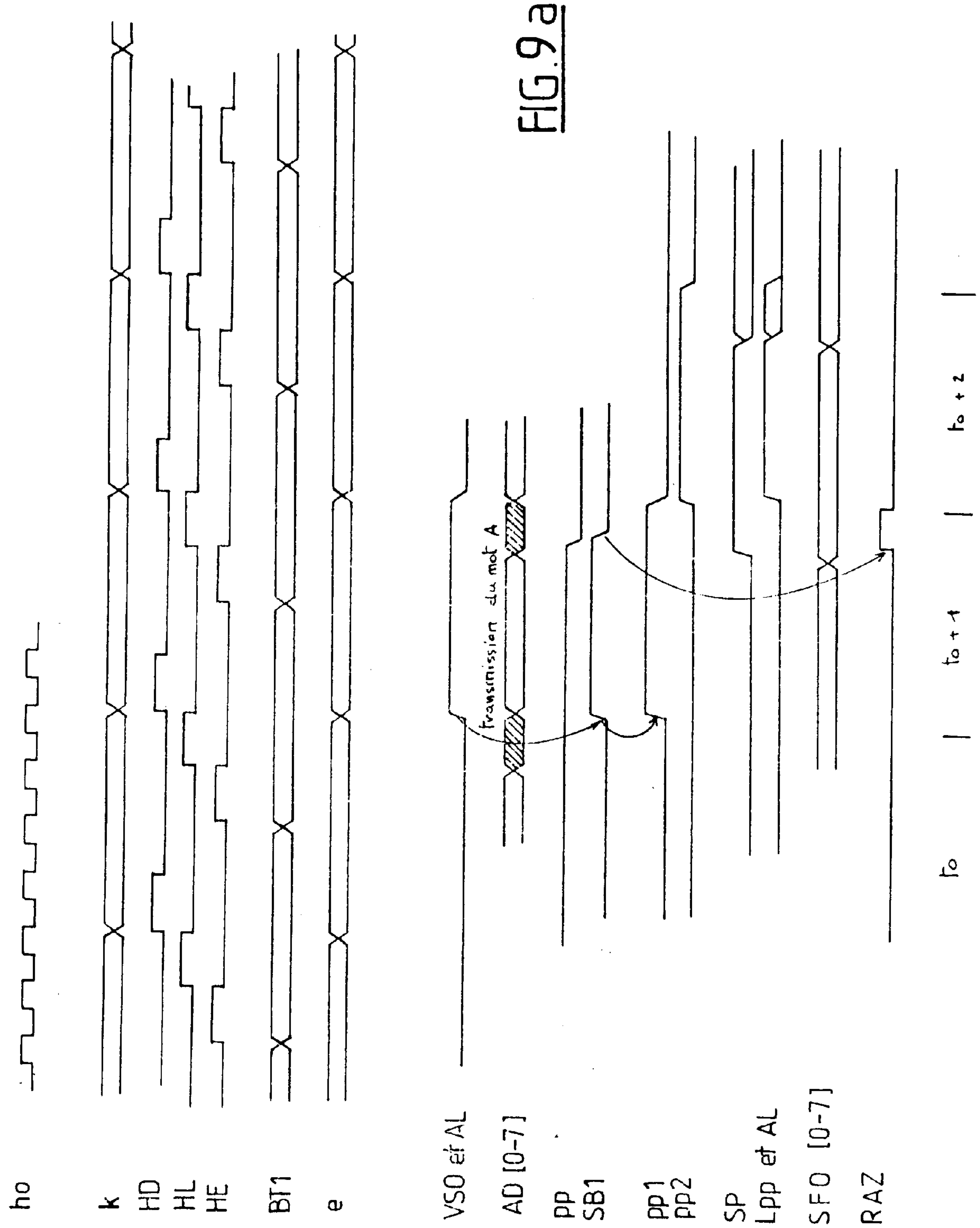
ho
k
HD
HL
HE
BT1
e
VSO et AL
AD [0-7]
pp
SB1
pp1
pp2
SP
Lpp et AL
SFO [0-7]
RAZ
transmission du mot A
to
to + 1
to + 2

FIG. 9a

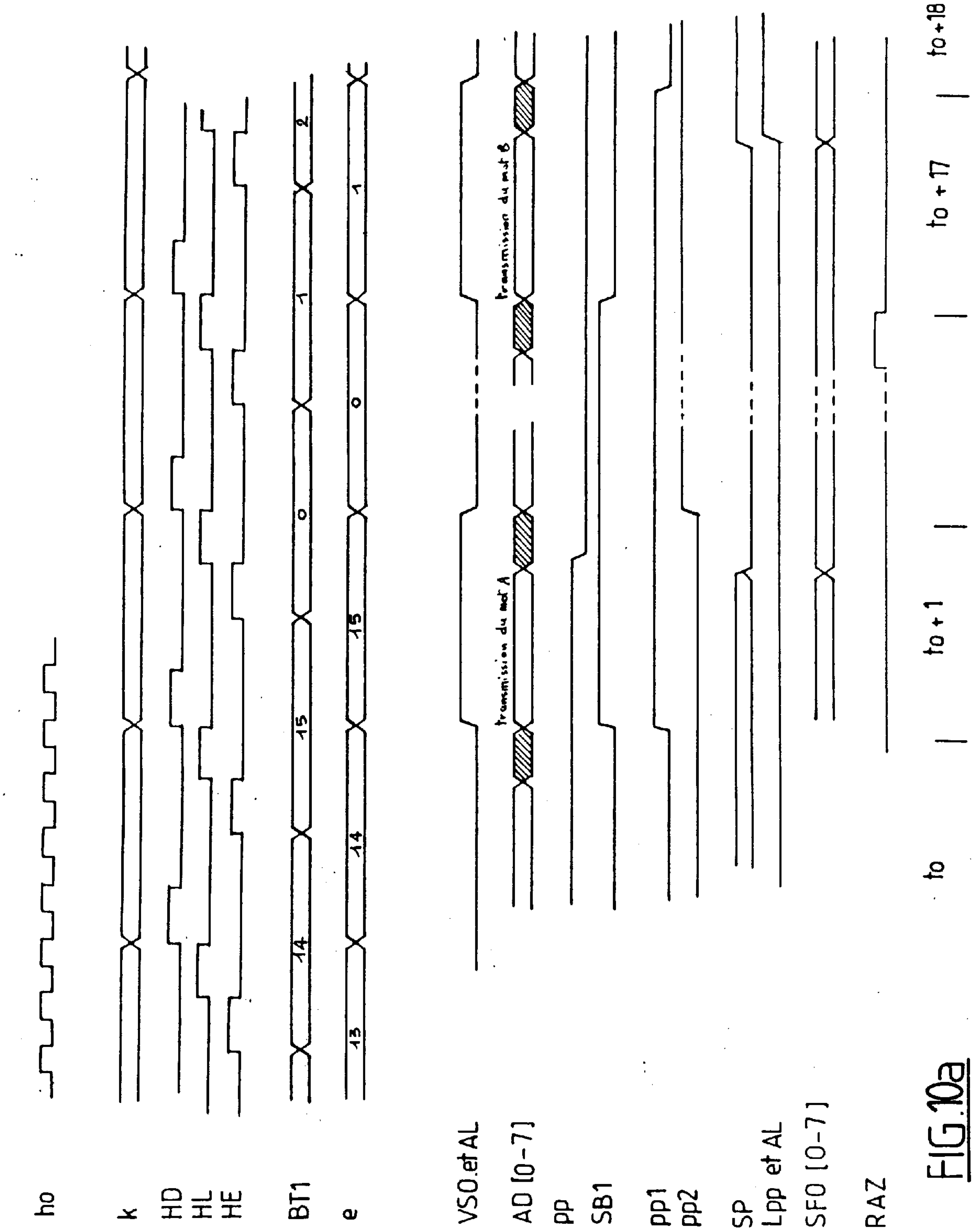
ho
k
HD
HL
HE
BT1
e
VSO et AL
AD [0-7]
pp
SB1
pp1
pp2
SP
Lpp et AL
SFO [0-7]
RAZ
14
15
0
1
2
13
14
15
0
1
transmission du mot A
transmission du mot B
to
to+1
to+17
to+18

FIG.10a

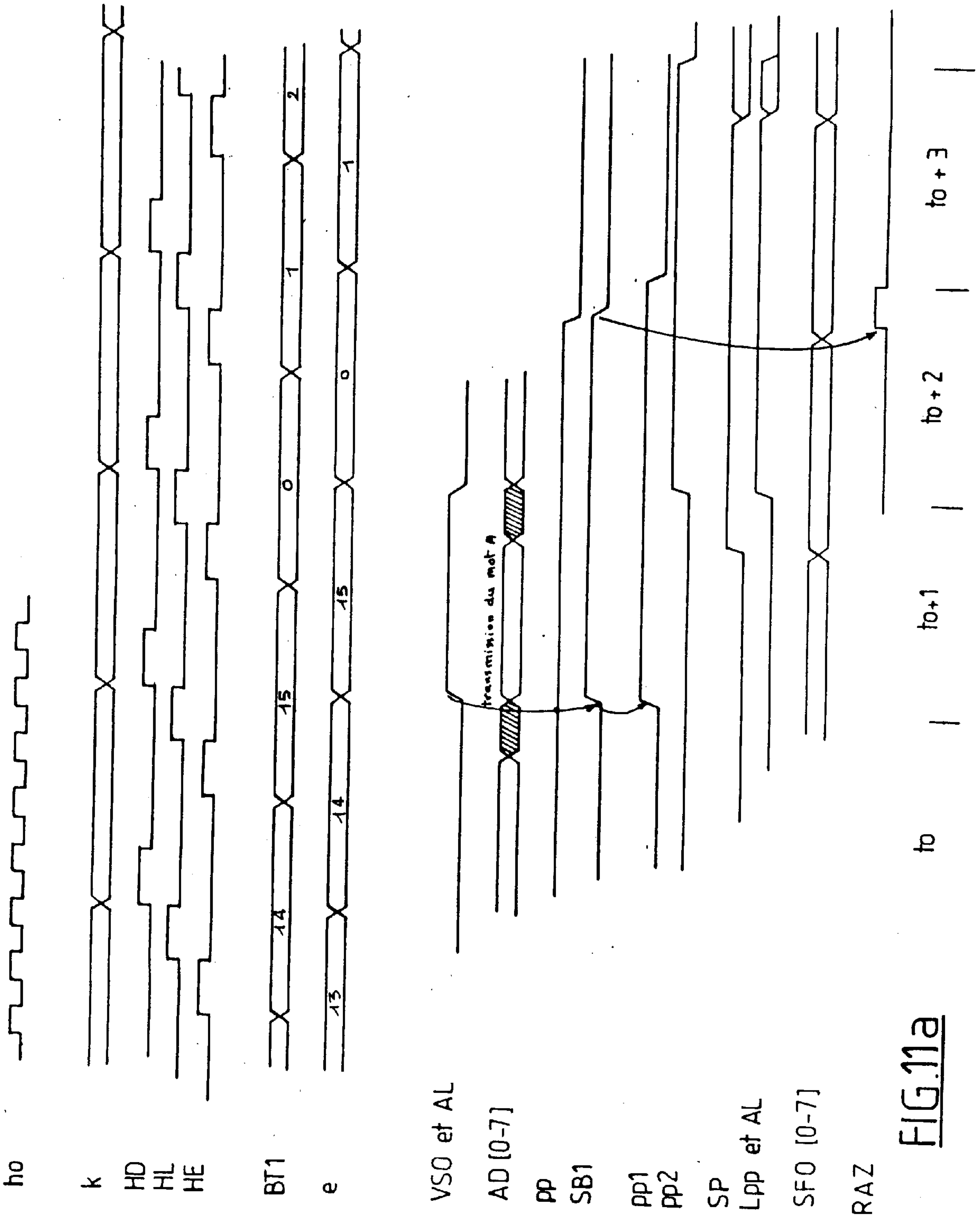
ho
k
HD
HL
HE
BT1
e
VSO et AL
AD [0-7]
pp
SB1
pp1
pp2
SP
Lpp et AL
SFO [0-7]
RAZ
13
14
15
0
1
2
transmission du mot A
to
to+1
to+2
to+3

FIG.11a

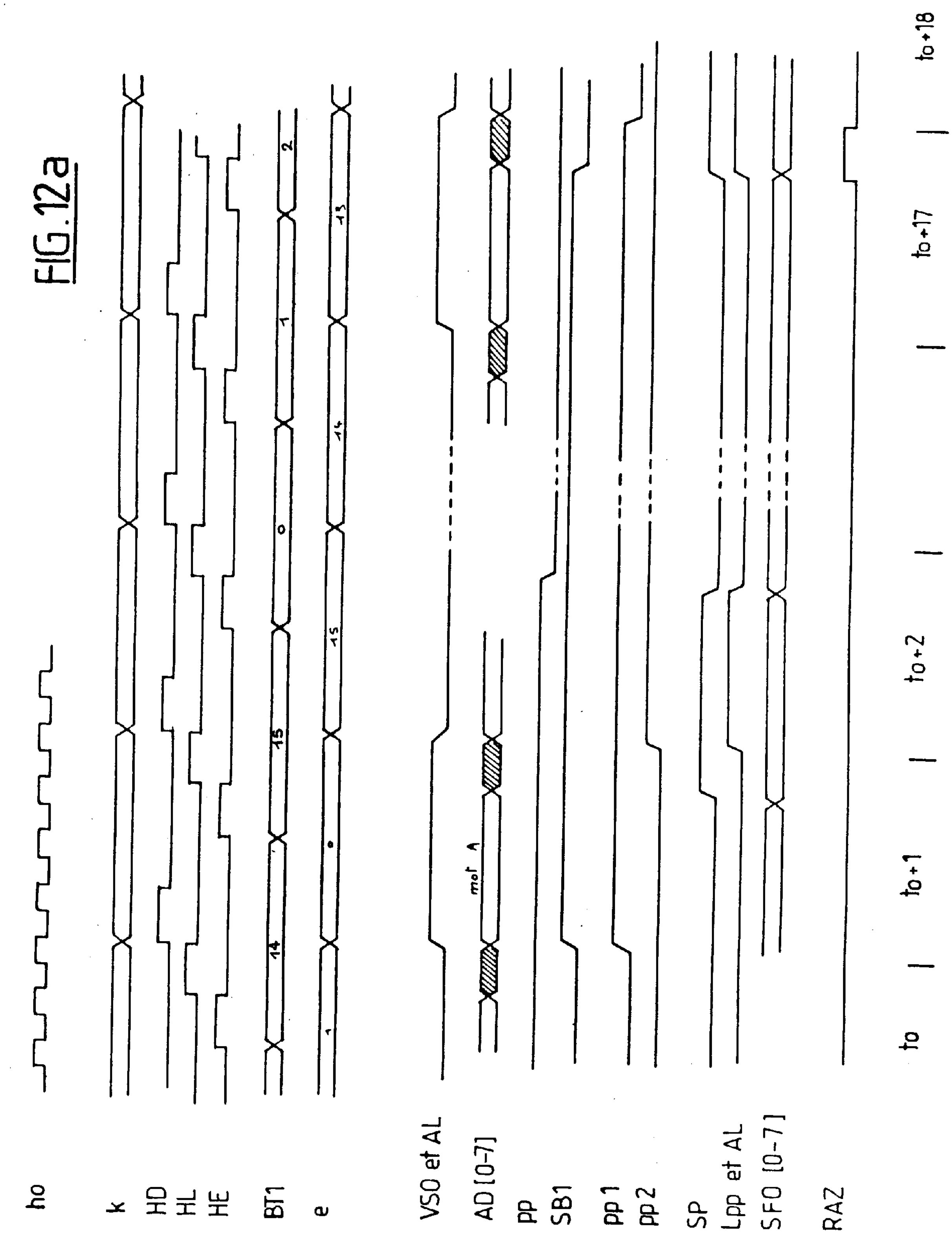
ho
k
HD
HL
HE
BT1
e
VSO et AL
AD [0-7]
pp
SB1
pp 1
pp 2
SP
Lpp et AL
SFO [0-7]
RAZ
to
to+1
to+2
to+17
to+18
14
15
0
1
2
13
mot A

FIG.12a